(19) Europäisches Patentamt
European Patent Office
Office européen des brevets

(11) Numéro de publication : **0 284 524 B1**

# (12) FASCICULE DE BREVET EUROPEEN

(45) Date de publication du fascicule du brevet : **11.12.91 Bulletin 91/50**

(51) Int. Cl.$^5$ : **C08G 73/12,** C07F 7/08

(21) Numéro de dépôt : **88420080.9**

(22) Date de dépôt : **03.03.88**

## (54) Polymères thermostables à base de maleimides dont un bismaleimide siloxane et de diamines aromatiques et leurs procédés de préparation.

(30) Priorité : **10.03.87 FR 8703514**

(43) Date de publication de la demande : **28.09.88 Bulletin 88/39**

(45) Mention de la délivrance du brevet : **11.12.91 Bulletin 91/50**

(84) Etats contractants désignés : **AT BE CH DE ES FR GB IT LI LU NL SE**

(56) Documents cités :
**GB-A- 2 137 644**
**CHEMICAL ABSTRACTS, vol. 101, no. 14, 1er octobre 1984, page 45, résumé no. 112026y, Columbus, Ohio, US; S. MAUDGAL et al.: "Preparation and characterization of a siloxane containing bismaleimide", & NATL. SAMPE SYMP. EXHIB., (PROC.) 1984, 29th (Technol. Vectors), 437-46**

(73) Titulaire : **RHONE-POULENC CHIMIE
25, quai Paul Doumer
F-92408 Courbevoie Cédex (FR)**

(72) Inventeur : **Barthelemy, Pascal
21, rue de la Part-Dieu
F-69003 Lyon (FR)**
Inventeur : **Camberlin, Yves
68 bis, Quai Clémenceau
F-69300 Caluire (FR)**

(74) Mandataire : **Trolliet, Maurice et al
RHONE-POULENC INTERSERVICES Service Brevets Chimie Centre de Recherches des Carrières B.P. 62
F-69192 Saint-Fons Cédex (FR)**

**EP 0 284 524 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention a pour objet de nouveaux polymères thermostables dont l'obtention met en jeu, à côté d'éventuels autre réactifs, des bis-maléimides dont un bis-maléimide renfermant dans sa structure un groupement diorganopolysiloxane et des diamines aromatiques. Elle concerne également des procédés de préparation de ces polymères.

On sait (cf. brevet français FR-A-1.555.564) que l'on peut obtenir des polymères thermostables en faisant réagir un N,N'-bis-imide d'acide dicarboxylique non saturé tel que par exemple un N,N'-bis-maléimide avec certaines diamines biprimaires aromatiques. Ces polymères, qui présentent une remarquable stabilité thermique, peuvent être utilisés pour la fabrication de pièces moulées ou de stratifiés, en vue des applications les plus diverses.

Il a maintenant été trouvé que l'on peut obtenir des polymères présentant, entre autre propriétés, une résistance au choc élevée, en faisant réagir un ou plusieurs N,N'-bis-maléimides du type de ceux décrits dans le brevet précité avec une ou plusieurs diamines biprimaires aromatiques, en présence d'un N,N'-bis-maléimide renfermant dans sa structure un groupement diorganopolysiloxane et éventuellement d'un autre réactif copolymérisable et/ou d'un catalyseur.

Plus précisément, la présente invention concerne des polymères à groupements imides caractérisés en ce qu'ils comprennent le produit de réaction à une température allant de 50°C à 300°C, entre :

— (a) un N,N'-bis-maléimide ou une association de plusieurs bis-maléimides de formule :

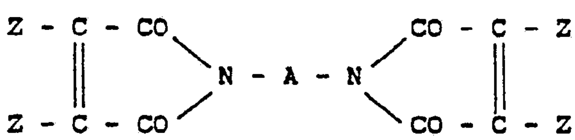

(I)

dans laquelle :

- les symboles Z, identiques ou différents, représentent chacun H, $CH_3$ ou Cl ;
- le symbole A représente un radical divalent choisi dans le groupe constitué par les radicaux : cyclohexylènes ; phénylènes ; méthyl-4 phénylènes-1,3 ; méthyl-2 phénylène-1,3 ; méthyl-5 phénylène-1,3; diéthyl-2,5 méthyl-3 phénylène-1,4 ; et les radicaux de formule :

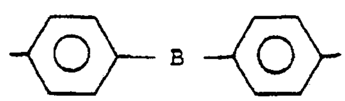

dans laquelle B représente un lien valentiel simple ou un groupement :

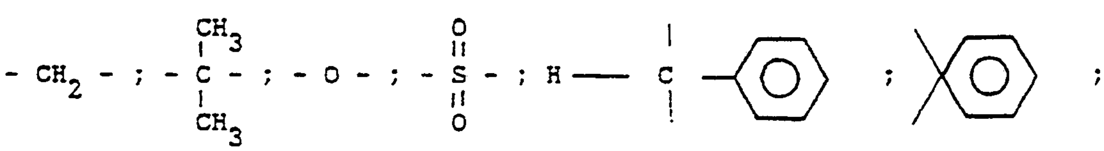

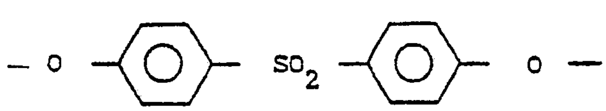

— (b) un N,N'-bis-maléimide à groupement diorganopolysiloxane répondant essentiellement à la formule générale :

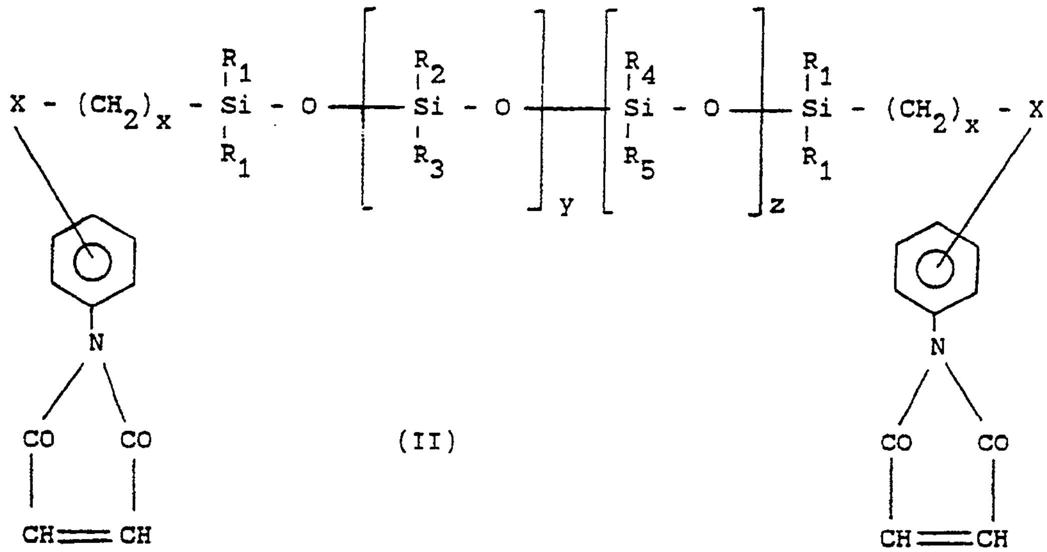

(II)

dans laquelle :

- X, qui est en position ortho, méta ou para par rapport à l'atome de carbone du cycle benzénique relié à l'azote, représente un atome ou groupement suivant :

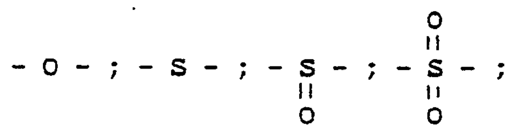

- $R_1$, $R_2$, $R_3$, $R_4$ et $R_5$, identiques ou différents, représentent chacun un radical hydrocarboné monovalent choisi parmi : les radicaux alkyles, linéaires ou ramifiés, ayant de 1 à 12 atomes de carbone, ces radicaux pouvant être substitués par un ou plusieurs atomes de chlore, de brome ou de fluor ou par un groupement —CN ; un radical phényle éventuellement substitué par un ou plusieurs radicaux alkyles et/ou alkoxy ayant de 1 à 4 atomes de carbone ou par un ou plusieurs atomes de chlore ;
- le symbole X est un nombre entier situé dans l'intervalle allant de 2 à 8.
- les symboles y et z représentent des nombres, identiques ou différents, entiers ou fractionnaires, dont la somme se situe dans l'intervalle allant de 0 à 100 ;

— (c) une ou plusieurs diamines biprimaires prises dans le groupe formé par :

* (c1) les espèces répondant à la formule générale :

$$H_2N-E-NH_2 \quad (III)$$

dans laquelle le symbole E représente l'un des radicaux divalents que représente le symbole A de la formule (I), les symboles A et E contenus dans un même polymère pouvant être identiques ou différents entre eux ;

* (c2) les espèces répondant à la formule générale :

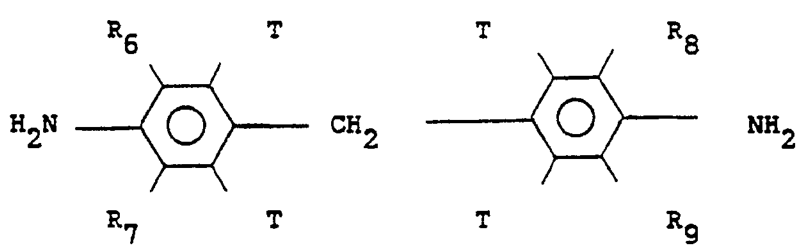

(IV)

dans laquelle :

- les symboles $R_6$, $R_7$, $R_8$ et $R_9$, identiques ou différents, représentent chacun un radical méthyle, éthyle, propyle ou isopropyle ;
- les symboles T, identiques ou différents, représentent chacun un atome d'hydrogène ou un atome de chlore ;

* et (c3) les espèces répondant à la formule générale :

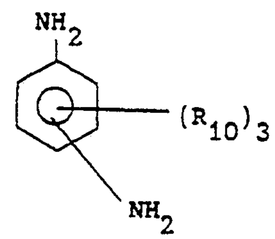

(V)

dans laquelle :

- les radicaux amino en position méta ou para, l'un par rapport à l'autre ;
- les symboles $R_{10}$, identiques ou différents, représentent chacun un radical méthyle, éthyle, propyle ou isopropyle ;

— (d) éventuellement un ou plusieurs monomères autres qu'un bis-maléimide de formule (I) ou de formule (II) et comportant une ou plusieurs doubles liaisons carbone-carbone polymérisables ;

— et (e) éventuellement un catalyseur.

A titre d'exemples spécifiques de bis-maléimides de formule (I), on peut citer en particulier :

— le N,N'-métaphénylène-bis-maléimide,
— le N,N'-paraphénylène-bis-maléimide,
— le N,N'-4,4'-diphénylméthane-bis-maléimide,
— le N,N'-4,4'-diphényléther-bis-maléimide,
— le N,N'-4,4'-diphénylsulfone-bis-maléimide,
— le N,N'-cyclohexylène-1,4'-bis,maléimide,
— le N,N'-4,4'-diphényl-1,1 cyclohexane-bis-maléimide,
— le N,N'-4,4'-diphényl-2,2 propane-bis-maléimide,
— le N,N'-4,4'-triphénylméthane-bis-maléimide,
— le N,N'-méthyl-2 phénylène-1,3-bis-maléimide,
— le N,N'-méthyl-4 phénylène-1,3-bis-maléimide,
— le N,N'-méthyl-5 phénylène-1,3-bis-maléimide.

Ces bis-maléimides peuvent être préparés selon les procédés décrits dans le brevet américain US-A-3.018.290 et le brevet anglais GB-A-1.137.290. On utilise de préférence, pour la mise en oeuvre de la présente invention, le N,N'-4,4'diphénylméthane-bis-maléimide pris seul ou en mélange avec le N,N'-méthyl-2 phénylène-1,3-bis-maléimide, le N,N-méthyl-4 phénylène-1,3 bis-maléimide et/ou le N,N'-méthyl-5 phénylène-1,3-bis-maléimide.

A propos des bis-maléimides siloxanes de formule (II), lorsque y et/ou z sont supérieurs à 1, on est en présence d'un composé à structure polymère et on a rarement un seul composé, mais le plus souvent un mélange de composés de même structure chimique, qui diffèrent par le nombre d'unités récurrentes de leur molécule ; cela conduit à une valeur moyenne de y et/ou z qui peut être entière ou fractionnaire.

Quand la préparation des polymères selon l'invention est effectuée, selon les indications données ci-après, au sein d'un diluant ou solvant organique, on peut utiliser l'un quelconque des composés de formule (II).

Comme bis-maléimides préférentiellement représentatifs, on peut citer ceux qui répondent à la formule (II), dans laquelle :

1. X = —O— ; $R_1$, $R_2$, $R_3$, $R_4$ et $R_5$, identiques ou différents, représentent chacun un radical alkyle, linéaire ou ramifié, ayant de 1 à 6 atomes de carbone ; x = 2, 3, 4 ou 5 ; y + z se situe dans l'intervalle allant de 0 à 100 et, de préférence, de 4 à 70.
2. X = —O— ; $R_1$, $R_2$, $R_3$, identiques ou différents, représentent chacun un radical alkyl linéaire ou ramifié, ayant de 1 à 6 atomes de carbone ; $R_4$, $R_5$ représentent chacun un radical phényle ; x = 2, 3, 4 ou 5 ; y + z se situe dans l'intervalle allant de 0 à 100 et, de préférence, de 4 à 70.
3. X = —O— ; $R_1$, $R_2$, $R_4$, identiques ou différents, représentent chacun un radical alkyle, linéaire ou ramifié, ayant de 1 à 6 atomes de carbone ; $R_3$, $R_5$ représentent chacun un radical phényle ; x = 2, 3, 4 ou 5 ; y + z se situe dans l'intervalle allant de 0 à 100 et, de préférence, de 4 à 70.

4. X = —O— ; $R_1$ représente un radical alkyle linéaire ou ramifié, ayant de 1 à 6 atomes de carbone ; $R_2$, $R_3$, $R_4$ et $R_5$ représentent chacun un radical phényle ; x = 2, 3, 4 ou 5 ; y + z se situe dans l'intervalle allant de 0 à 100 et, de préférence, de 4 à 70.

Comme bis-maléimides encore plus préférentiellement représentatifs, on peut citer ceux qui répondent à la formule (II) dans laquelle :

5. X = —O— ; $R_1 = R_2 = R_3 = R_4 = R_5$ = radical alkyle, linéaire ayant de 1 à 3 atomes de carbone ; x = 2, 3 ou 4 ; y + z se situe dans l'intervalle allant de 0 à 100 et, de préférence, de 4 à 70.

6. X = —O— ; $R_1 = R_2 = R_3$ = radical alkyle linéaire ayant de 1 à 3 atomes de carbone ; $R_4 = R_5$ radical phényle ; x = 2, 3 ou 4 ; y + z se situe dans l'intervalle allant de 0 à 100 et, de préférence, de 4 à 70.

7. X = —O— ; $R_1 = R_2 = R_4$ = radical alkyle linéaire ayant de 1 à 3 atomes de carbone ; $R_3 = R_5$ = un radical phényle ; x = 2, 3 ou 4 ; y + z se situe dans l'intervalle allant de 0 à 100 et, de préférence, de 4 à 70.

8. X = — O — ; $R_1$ = radical alkyle linéaire ayant de 1 à 3 atomes de carbone ; $R_2 = R_3 = R_4 = R_5$ = radical phényle ; x = 2, 3 ou 4 ; y + z se situe dans l'intervalle allant de 0 à 100 et, de préférence, de 4 à 70.

Comme bis-maléimides qui sont tout particulièrement représentatifs, on peut citer ceux qui répondent à la formule (II) dans laquelle :

9. X = —O— ; $R_1 = R_2 = R_3 = R_4 = R_5$ = radical méthyle ; x = 3 ; y + z se situe dans l'intervalle allant de 0 à 100 et, de préférence, de 4 à 70.

10. X = —O— ; $R_1 = R_2 = R_3$ = radical méthyle ; $R_4 = R_5$ = radical phényle ; x = 3 ; y + z se situe dans l'intervalle allant de 0 à 100 et, de préférence de 4 à 70.

11. X = —O— ; $R_1 = R_2 = R_4$ = radical méthyle ; $R_3 = R_5$ = radical phényle ; x = 3 ; y + z se situe dans l'intervalle allant de 0 à 100 et, de préférence, de 4 à 70.

12. X = —O— ; $R_1$ = radical méthyle ; $R_2 = R_3 = R_4 = R_5$ = radical phényle ; x = 3 ; y + z se situe dans l'intervalle allant de 0 à 100 et, de préférence, de 4 à 70.

Comme exemples spécifiques de bis-maléimides siloxanes qui sont tout particulièrement représentatifs, on citera notamment :

13.

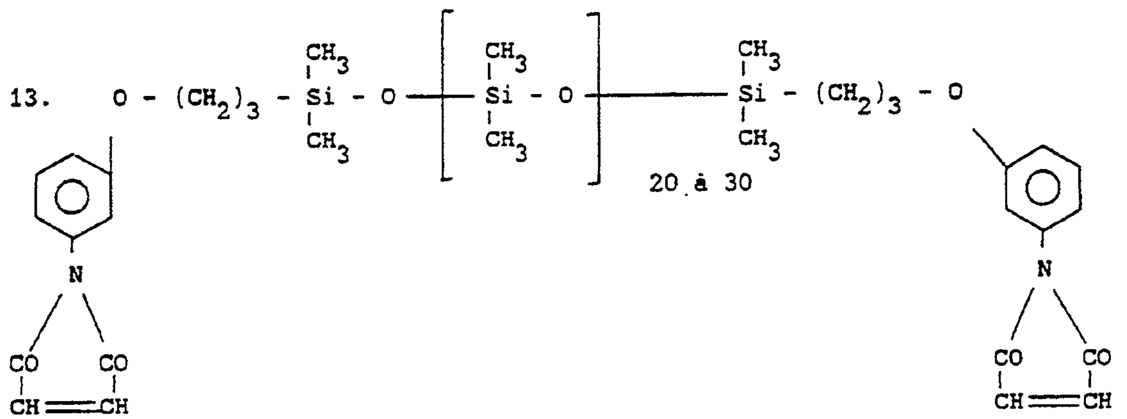

14.

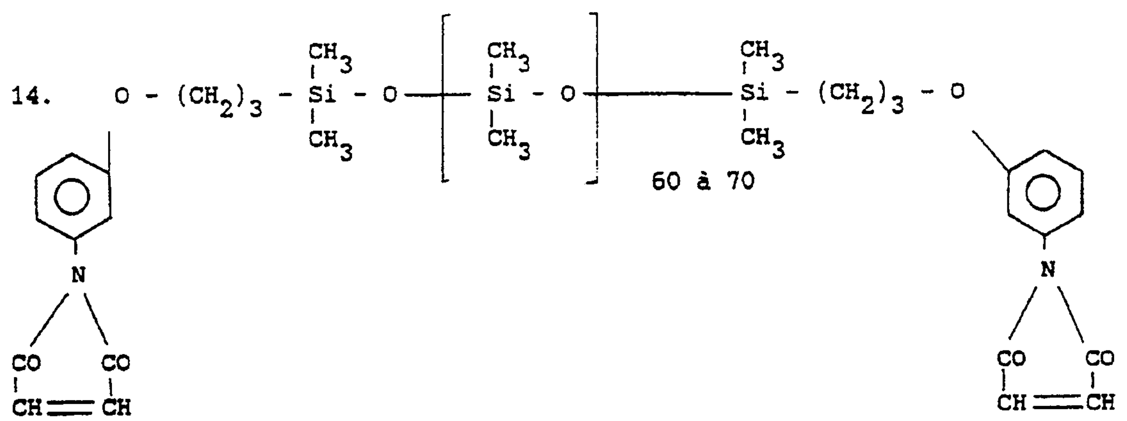

15.

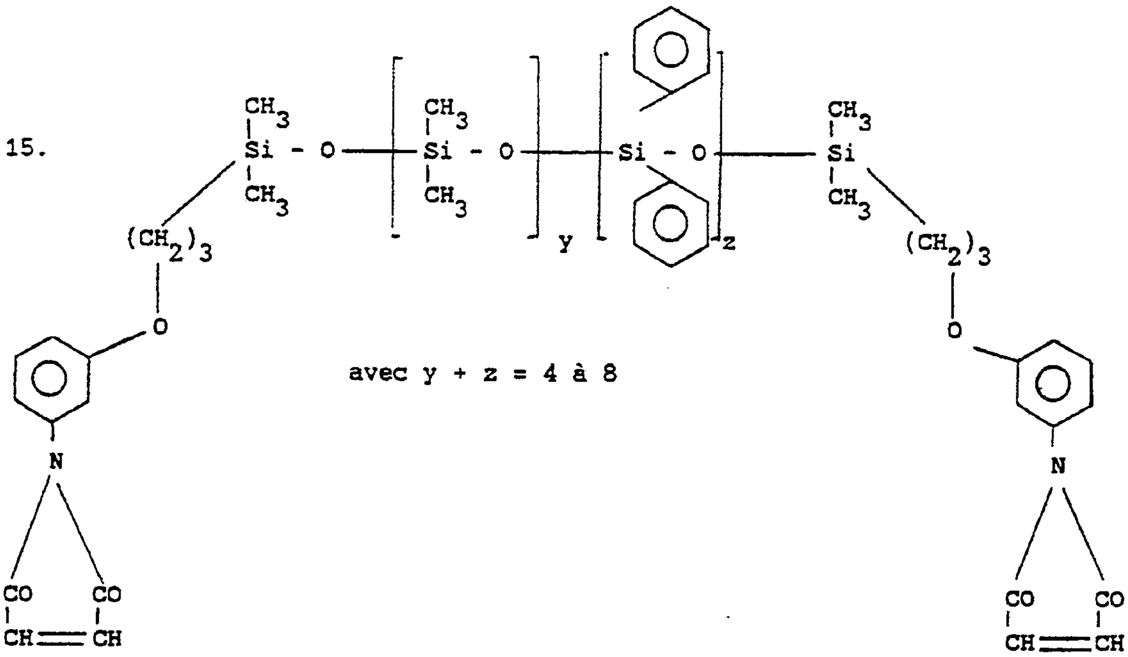

avec y + z = 4 à 8

16.

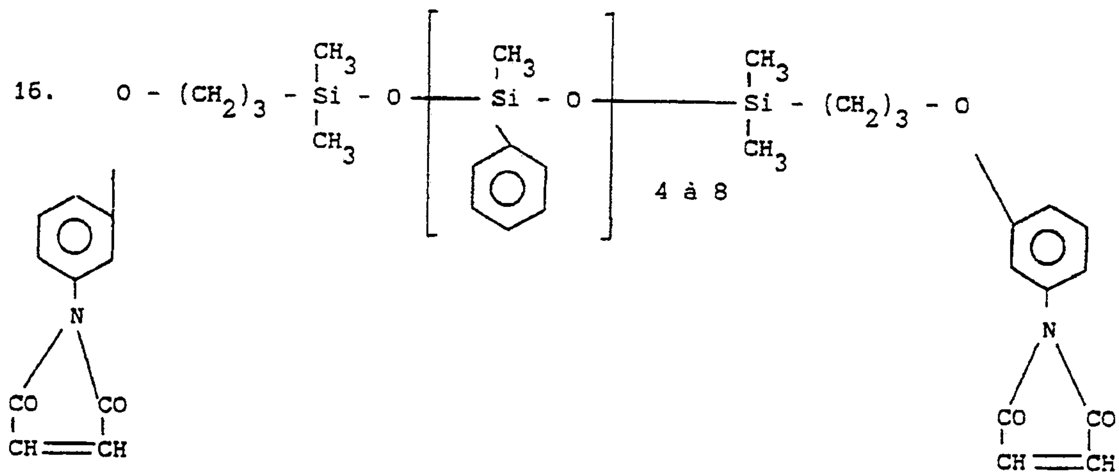

Quand la préparation des polymères selon l'invention est effectuée en masse, on utilise de préférence comme bis-maléimides de formule (II) ceux où le groupement diorganopolysiloxane renferme une pluralité de liaisons Si-phényle ou Si-phényle substitué. Des bis-maléimides de ce type qui conviennent sont ceux appartenant aux groupes suivants, classés par ordre croissant de préférence :

— bis-maléimides n° 2, 3 et 4 ;
— bis-maléimides n° 6, 7 et 8 ;
— bis-maléimides n° 10, 11 et 12 ;

Parmi les bis-maléimides appartenant à ces groupes préférés, ceux qui conviennent tout particulièrement bien pour préparer des polymères en masse sont les composés dans lesquels le rapport :

$$\frac{\text{nombre de liaisons Si-phényle (éventuellement substitué)}}{\text{nombre de liaisons Si-alkyle}}$$

est au moins égal à 0,25 ; à titre d'exemples spécifiques de bis-maléimides de ce type, on se rapportera notamment aux composés n° 16.

Les bis-maléimides de formule (II) sont des composés originaux qui sont obtenus en faisant réagir l'anhydride maléique, en présence d'un agent déshydratant, d'une amine tertiaire, d'un diluant organique et d'un catalyseur, sur une diamine à groupement diorganopolysiloxane de formule :

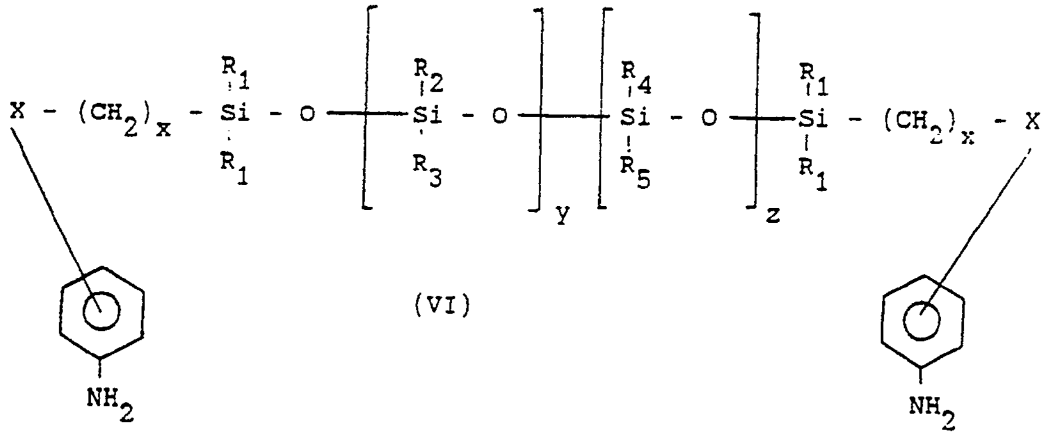

(VI)

dans laquelle X, $R_1$, $R_2$, $R_3$, $R_4$, $R_5$, x, y, et z ont les significations données ci-avant pour la formule (II).

Ces diamines (VI) à groupement diorganopolysiloxane sont des composés qui sont bien connus dans l'art antérieur. Elles sont par exemple décrites dans le brevet anglais GB-B-1.062.418 et dans le brevet américain US-4.395.527.

Selon ces documents, une première méthode de préparation de ces diamines, applicable en particulier lorsque l'on peut obtenir un composé de formule (VI) où y = z = O, c'est à dire lorsque l'on peut obtenir une diamine à groupement diorganodisiloxane, consiste à faire réagir un composé de formule

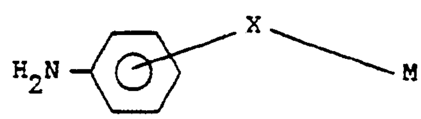

où X a la signification donnée ci-avant et M est un métal alcalin ou alcalino-terreux, avec un bis-(halogénoalkyl)disiloxane de formule :

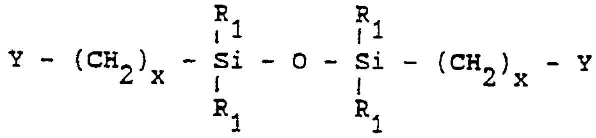

où x a la valeur indiquée ci-avant et Y est un atome de chlore, de brome ou d'iode, en opérant à une température comprise entre 20° et 200°C en présence d'un solvant polaire aprotique.

Dans le cas où l'on veut obtenir une diamine de formule (VI) où y et/ou z sont différents de zéro, une seconde méthode de préparation enseignée par ces documents consiste à copolymériser une mole de diamine à groupement diorganopolysiloxane, préparée comme indiqué ci-dessus, avec une quantité d'un ou plusieurs diorganopolysiloxanes cycliques capables de donner y moles de groupes siloxy de formule :

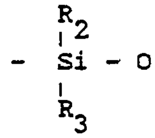

et/ou z moles de groupes siloxy de formule :

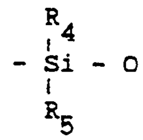

En général, la réaction se déroule à une température comprise entre 80° et 250°C en présence là aussi d'un solvant et éventuellement d'un catalyseur approprié.

Une autre façon de préparer les diamines de formule (VI), avec y et/ou z étant égaux à zéro ou différents de zéro, est de faire réagir sur un composé à insaturation éthylénique de formule :

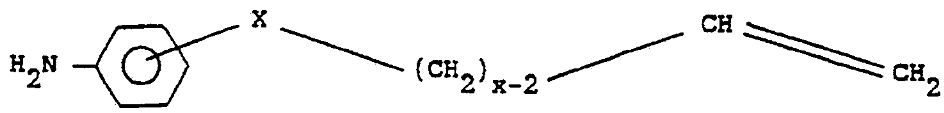

dans laquelle X, qui est en position ortho, méta ou para par rapport à l'atome de carbone du cycle benzénique relié à l'azote, et x ont les significations données ci-avant, un alpha, oméga-bis(hydrogéno) diorganopolysiloxane de formule :

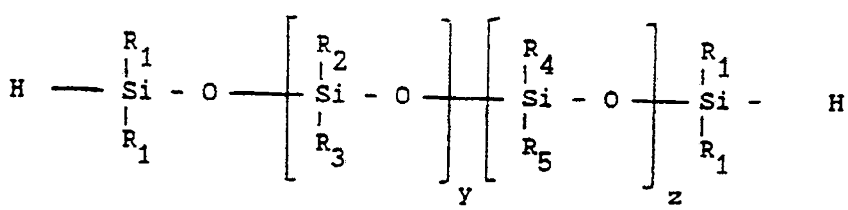

dans laquelle $R_1$, $R_2$, $R_3$, $R_4$, $R_5$, y et z ont les significations données ci-avant. Cette réaction d'hydrosilylation est conduite en opérant en masse en absence de solvant et en utilisant un catalyseur à base de platine. Les alpha, oméga-bis(hydrogéno)diorganopolysiloxanes mis en oeuvre sont des produits bien connus dans l'industrie des silicones et sont, pour certains, disponibles dans le commerce. Ils sont par exemple décrits dans les brevets français FR-A1-2.486.952 et FR-A5-2.058.988.

Quand on choisit de faire appel à cette réaction d'hydrosilylation pour préparer une diamine de formule (VI), le substrat aminé à insaturation éthylénique qui est bien adapté pour réagir avec l'alpha, oméga-bis(hydrogéno)diorganopolysiloxane consiste notamment dans une allyloxyaniline de formule :

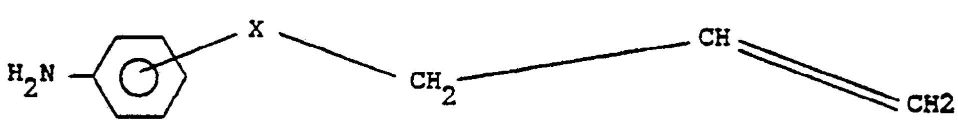

Dans ces conditions privilégiées, on est donc conduit à des diamines de formule (VI) qui serviront à fabriquer certains des bis-maléimides de formule (II), c'est à dire ceux où X = —O—, x = 3 et $R_1$, $R_2$, $R_3$, $R_4$, $R_5$, y et z ont les significations générales ou précises données ci-avant.

Pour en revenir au procédé de préparation des bis-maléimides de formule (II), on fait réagir, comme indiqué ci-avant, la diamine de formule (VI) avec l'anhydride maléique en présence d'un agent déshydratant, d'une amine tertiaire, d'un diluant organique et d'un catalyseur.

L'anhydride maléique est utilisé en quantités au moins égales à une mole par fonction $NH_2$ disponible ; on utilise généralement des quantités plus importantes qui sont de l'ordre de 1,01 à 1,5 moles par fonction $NH_2$

disponible.

Comme déshydratant on utilise avantageusement un anhydride d'acide carboxylique inférieur tel que l'anhydride acétique en quantité au moins égale à une mole par fonction $NH_2$ disponible présent dans la molécule de diamine de formule (VI) engagée. On utilise généralement des quantités plus importantes qui sont de l'ordre de 1,05 à 1,5 moles par fonction $NH_2$ disponible.

Parmi les amines tertiaires convenables, on peut citer notamment les trialkylamines ainsi que les N,N-dialkylanilines dans lesquelles les radicaux alkyles ont de 1 à 12 atomes de carbone. La triéthylamine et la N,N-diméhtylaniline sont d'un emploi avantageux. Les quantités d'amine tertiaire se situent généralement entre 0,05 et 0,8 moles par fonction $NH_2$ disponible.

La réaction est effectuée au sein d'un diluant organique liquide dans les conditions opératoires, pratiquement entre 20° et 100° à la pression atmosphérique. Parmi les diluants utilisables, on donnera la préférence à ceux qui dissolvent, dans les conditions de température adoptées pour la réaction et en présence des autres constituants du mélange réactionnel, l'anhydride maléique de départ.

Parmi eux on peut citer notamment :

— les hydrocarbures tels que le benzène, le toluène, le cyclohexane,

— les dérivés chlorés tels que le chlorobenzène ou le chlorure de méthylène,

— les éthers oxydes cycliques ou non cycliques tels que le tétrahydrofuranne, le dioxane ou l'éther éthylique,

— les dialkylcétones telles que l'acétone ou la méthyl éthyl cétone.

En tant que catalyseurs, on peut utiliser un dérivé du nickel soluble dans la phase liquide du mélange réactionnel comme par exemple des sels de nickel d'acides carboxyliques, éventuellement hydratés ainsi que les formes chélatées de ce métal. L'acétate et l'acétylacétonate conviennent particulièrement bien. Ces catalyseurs sont employés en quantités très faibles, de l'ordre de $0,5.10^{-3}$ à $5.10^{-3}$ moles par mole fonction $NH_2$ disponible.

Pratiquement, pour la mise en oeuvre du procédé, on commence par faire réagir l'anhydride maléique et la diamine de formule (VI) en opérant dans le diluant choisi à une température allant de 30°C à 100°C pendant une durée allant, selon la température, de quelques minutes à 1 heure. Puis on ajoute dans le milieu réactionnel l'agent déshydratant, l'amine tertiaire et enfin le catalyseur, puis on laisse réagir le mélange dans les conditions de température adoptées précédemment pendant une durée allant, selon la température, de 1 heure à 3 heures. Généralement, la réaction est terminée par addition d'un non solvant tel que l'eau, puis le bis-maléimide de formule (II) préparé est isolé selon les méthodes usuelles.

A titre d'exemples spécifiques de diamines (C1) de formule (III), on peut citer en particulier :

— la paraphénylène diamine,

— la métaphénylène diamine,

— le diamino-4,4′ diphénylméthane,

— le bis (amino-4 phényl)-2,2 propane,

— la benzidine,

— l'oxyde de bis-(amino-4 phényl),

— la diamine-4,4′ diphénylsulfone,

— et leurs mélanges.

On utilise de préférence pour la mise en oeuvre de la présente invention, le diamino-4,4′ diphénylméthane.

A titre d'exemples spécifiques de diamines encombrées (C2) et (C3) de formules (IV) et (V), on peut citer en particulier :

— le diamino-4,4′ tétraméthyl-3,3′, 5,5′ diphénylméthane,

— le diamino-4,4′ tétraéthyl-3,3′, 5,5′ diphénylméthane,

— le diamino-4,4′ diméthyl-3,5 diéthyl-3′,5′ diphénylméthane,

— le diamino-4,4′ diéthyl-3,3′ diméthyl-5,5′ diphénylméthane,

— le diamino-4,4′ tétraisopropyl-3,3′, 5,5′ diphénylméthane,

— le diamino-4,4′ diisopropyl-3,3′ diméthyl-5,5′ diphénylméthane,

— le diamino-4,4′ dichloro-2,2′ tétraéthyl-3,3′, 5,5′ diphénylméthane,

— le diamino-1,3 diéthyl-2,4 méthyl-6 benzène,

— le diamino-1,3 méthyl-2 diéthyl-4,6 benzène,

— et leurs mélanges.

Ces diamines encombrées peuvent être préparées selon les procédés décrits dans le brevet anglais GB-A-852.651 et le brevet américain US-A-3.481.900. On utilise de préférence, pour la mise en oeuvre de la présente invention, le diamino-4,4′ tétraéthyl-3,3′, 5,5′ diphénylméthane, le diamino-4,4′ diéthyl-3,3′ diméthyl-5,5′ diphénylméthane et leurs mélanges.

Vis à vis des polyimides obtenus selon le brevet francais FR-A-1.555.564 par chauffage notamment de

N,N'-4,4'-diphénylméthane-bis-maléimide et d'une diamine aromatique, on a constaté que l'ajout dans le milieu de polymérisation d'un N,N'-bis-maléimide à groupement diorganopolysiloxane de formule (II) est une mesure permettant notamment de faciliter, lors de la préparation de ces polymères en masse, le passage à l'état fondu des maléimides et d'améliorer nettement les propriétés mécaniques en multipliant au moins par 1,5 les valeurs de résilience des polymères durcis.

Il peut être avantageux dans certains cas de modifier les polymères selon la présente invention par emploi d'un réactif copolymérisable (d). Comme réactif facultatif (d) qui convient bien, on peut citer en particulier :

♦ quand on souhaite par exemple abaisser la fluidité du milieu de polymérisation :

($d_1$) soit un ou plusieurs monomères de formule :

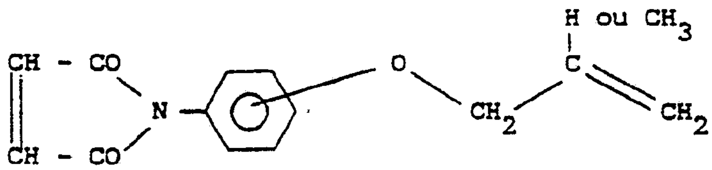

(VII)

dans laquelle le radical allyloxy ou méthallyloxy est en position ortho, métha ou para par rapport à l'atome de carbone du cycle benzénique relié à l'azote ;

($d_2$) soit un composé comprenant :

— un mélange d'un monomère de formule :

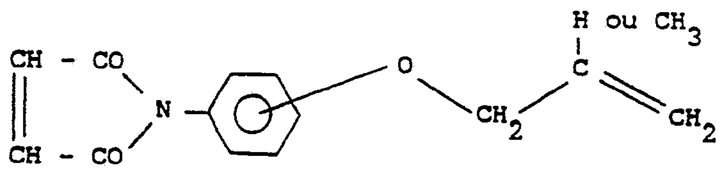

(VII)

dans laquelle le radical allyloxy ou méthallyloxy est en position ortho, méta ou para par rapport à l'atome de carbone du cycle benzénique relié à l'azote.

— avec :

• au moins un dérivé monosubstitué de formule :

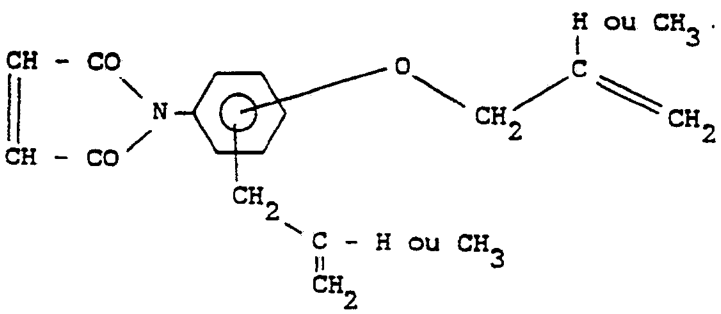

(VIII)

• et éventuellement un ou plusieurs dérivés disubstitués de formule :

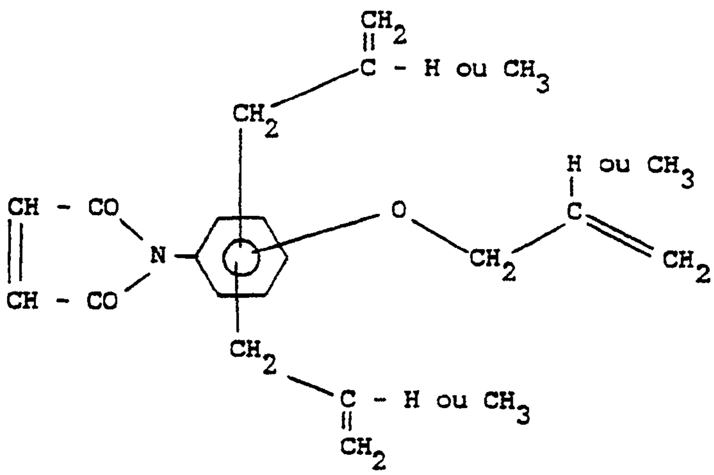

(IX)

Dans le composé précité servant de réactif ($d_2$), les proportions des divers constituants du mélange des produits de formules (VII), (VIII) et éventuellement (IX) peuvent varier dans de larges limites. De manière générale, les proportions des constituants sont choisies entre les limites suivantes (exprimant le pourcentage pondéral de chacun des constituants dans le mélange) :

— au moins 30%, et de préférence de 50% à 80% de N-(méth)allyloxyphénylmaléimide de formule (VII),

— de 5% à 50% et de préférence de 10% à 35% de dérivé(s) mono-(méth)allyl substitué(s) de formule (VIII),

— et de 0% à 20% et de préférence de 0% à 15% de dérivé(s) di-(méth)allyl substitué(s) de formule (IX), la somme des constituants devant dans chaque cas être égale à 100% en poids.

♦ quand on souhaite par exemple améliorer davantage les propriétés de flexion à chaud :

($d_3$) un ou plusieurs hétérocycles substitués comportant une ou plusieurs doubles liaisons carbone-carbone.

Il doit être bien entendu que l'on peut utiliser, comme réactif (d), des mélanges de réactifs ($d_1$) + ($d_3$) ou ($d_2$) + ($d_3$).

S'agissant du réactif facultatif ($d_1$), il est choisi parmi :

— le N-(allyloxy-2 phényl)maléimide,

— le N-(allyloxy-3 phényl)maléimide,

— le N-(allyloxy-4 phényl)maléimide,

— le N-(méthallyloxy-2 phényl)maléimide,

— le N-(méthallyloxy-3 phényl)maléimide,

— le N-(méthallyloxy-4 phényl)maléimide et leurs mélanges.

Les maléimides de formule (VII) sont des produits connus qui sont décrits dans la demande de brevet européen EP-A1-0208.634.

S'agissant du réactif facultatif ($d_2$), on utilise de préférence comme composé comprenant un mélange de N-(méth)allyloxyphénylmaléimide de formule (VII) avec un ou plusieurs dérivés de substitution (méth)allylés de formule(s) (VIII) et éventuellement (IX), le produit brut obtenu par mise en oeuvre du procédé ci-après défini.

Ce procédé est caractérisé en ce qu'il consiste à réaliser les 3 étapes suivantes qui sont enchaînées dans le même réacteur :

— la première étape consiste à faire réagir en milieu solvant un aminophénol avec de l'anhydride maléique en opérant à une température allant de 20°C à 200°C, pendant une durée allant, selon la température choisie, de 30 minutes à 2 heures et elle conduit à un premier milieu réactionnel comprenant un acide N-(hydroxyphényl)maléamique ;

— la deuxième étape consiste à réaliser une réaction de (méth)allylation de l'acide précité en faisant réagir le premier milieu réactionnel précité avec un halogénure de (méth)allyle en opérant à un pH qui doit être ajusté et maintenu à une valeur constante comprise entre 7 et 14 par addition d'une quantité déterminée d'une solution aqueuse alcaline et à une température allant de 40°C à 150°C et elle conduit, après acidification et élimination de la phase aqueuse, à un second milieu réactionnel organique comprenant un acide N-[(méth)allyloxyphényl] maléamiques, un ou plusieurs acides N-[(méth)allyloxy, (méth)allyl-phényl] maléiques et éventuellement un ou plusieurs acides N-[(méth)allyloxy, di(méth)allylphényl] maléamiques ;

— la troisième étape consiste à réaliser une réaction de cyclisation des acides maléamiques précités en faisant réagir le seond milieu réactionnel précité avec un anhydride d'acide carboxylique inférieur, en présence d'une amine tertiaire et éventuellement d'un catalyseur, puis à éliminer le solvant de la réaction et elle conduit à un produit brut de réaction qui est un composé comprenant un mélange formé de : au moins 30% en poids et de préférence de 50% à 80% de N-(méth)allyloxyphénylmaléimide, de 5% à 50% en poids et de préférence de 10% à 35% en poids d'un ou plusieurs N-[(méth)allyloxy, (méth)allylphényl] maléimides et de 0% à 20% en poids et de préférence de 0 à 15% en poids d'un ou plusieurs N-[(méth)allyloxy,di(méth)allylphényl] maléimides.

Les 3 étapes qui viennent d'être décrites sont enchainées dans un solvant unique pour une plus grande simplicité du procédé, mais il est possible d'opérer un changement de solvant, au cours de telle ou telle étape, sans inconvénient. Le choix du solvant peut être très large, mais, comme la deuxième étape est réalisée en milieu biphasique hydro-organique, il peut être souhaitable de mettre en oeuvre un solvant organique non miscible à l'eau, ce qui simplifie considérablement le traitement de la masse réactionnelle. Parmi les solvants miscibles ou non miscibles à l'eau utilisables, on donnera en fait la préférence à ceux qui dissolvent, dans les conditions de température adoptées pour la synthèse, l'aminophénol de départ. Parmi ces solvants, on peut citer par exemple : les alcools (comme par exemple : méthanol, éthanol, butanol) ; les cétones (comme par exemple : acétone, méthyléthylcétone, méthylisobutylcétone) ; les nitriles (comme par exemple : benzonitrile, propionitrile, acétonitrile) ; les esters (comme par exemple : acétate d'éthyle, de butyle) ; des solvants aromatiques (comme par exemple : anisole, chlorobenzène) ; des hydrocarbures halogénés (comme par exemple : chloroforme, dichlorométhane, dichloroéthane).

S'agissant de la première étape du procédé, on peut dire que la concentration des réactifs de départ dans le solvant utilisé n'est pas critique. On n'a pas intérêt tout de même ni à trop diluer pour des raisons de productivité, ni à trop concentrer pour avoir une bonne agitabilité. Dans cette première étape l'anhydride maléique est utilisé en quantités au moins égales à une mole par mole d'aminophénol ; on utilise généralement des quantités plus importantes qui sont de l'ordre de 1,01 à 1,5 moles par mole d'aminophénol. De plus la température se situe de préférence entre 40°C et 60°C.

S'agissant de la deuxième étape, on commence par ajouter dans le milieu réactionnel la quantité d'une solution aqueuse alcaline, par exemple d'une solution aqueuse de NaOH, nécessaire d'une part pour salifier l'acide N-(hydroxyphényl) maléamique et d'autre part pour obtenir le pH désiré. Le pH sera maintenu constant pendant toute la réaction par ajout de soude ; de manière préférentielle, le pH est ajusté et maintenu à une valeur constante comprise entre 10 et 12. La réaction d'allylation est réalisée de préférence avec le bromure ou le chlorure de (méth)allyle. La quantité d'halogénure de (méth)allyle est de l'ordre de 1,5 à 10 moles par groupement molaire OH phénolique et, de préférence, de l'ordre de 2 à 4.

L'excès de ce réactif peut être récupéré en fin d'opération et recyclé dans une opération suivante. Le temps de coulée de l'halogénure de (méth)allyle n'est par critique et il peut se situer dans l'intervalle allant de 1 heure à 5 heures, et, de préférence, allant de 2 heures à 4 heures. Dans cette deuxième étape, la température se situe de préférence entre 60°C et 100°C. A noter qu'en fin d'étape la phase aqueuse est acidifiée jusqu'à un pH environ égal à 1 par des acides habituels, de préférence des oxyacides ou des hydracides minéraux. La couche aqueuse est éliminée et on laisse dans le réacteur la couche organique.

S'agissant de la troisième étape du procédé, on utilise, avantageusement comme anhydride d'acide carboxylique inférieur, l'anhydride acétique en quantités au moins égales à une mole par groupement molaire HOOC-CH=CH-CO-NH à cycliser. On utilise généralement des quantités plus importantes qui sont de l'ordre de 1,05 à 1,5 moles par groupement maléamique.

Parmi les amines tertiaires convenables, on peut citer notamment les trialkylamines ainsi que les N,N-dialkylanilines dans lesquelles les radicaux alkyles ont de 1 à 12 atomes de carbone. La triéthylamine et la N-N-diméthylaniline sont d'un emploi avantageux. Les quantités d'amine tertiaire se situent entre 0,05 et 2 moles par groupement molaire HOOC-CH=CH-CO NH—.

En tant que catalyseurs, on peut utiliser par exemple des sels de nickel d'acides carboxyliques, éventuellement hydratés ainsi que les formes chélatées de ce métal. L'acétate et l'acétylacétonate conviennent particulièrement bien. Ces catalyseurs sont employés en quantités très faibles, de l'ordre de 0,05 à 1,5 g par groupement molaire HOOC-CH=CH-CO-NH— et, de préférence, de l'ordre de 0,1 à 0,8 g.

Dans cette troisième étape, la température n'est pas critique et n'a une incidence que sur la cinétique de la réaction. Cette température peut être comprise par exemple entre 40°C et 150°C et, de préférence, entre 60°C et 80°C. En fin de cette étape, le solvant est éliminé par distillation sous vide et on obtient le produit brut de réaction ayant l'aspect d'une huile.

Conformément à une modalité très préférée de mise en oeuvre, le procédé précité s'applique bien, au départ de métaaminophénol, à la préparation des composés comprenant des mélanges à base de :
N-[(méth)allyloxy-3 phényl]maléimide + N-[(méth)allyloxy-3 (méth)allyl-4 phényl]maléimide + N-[(méth)allyloxy-3 (méth)allyl-6 phényl]maléimide + éventuellement N-[(méth)allyloxy-3 di(méth)allyl-4,6 phényl]maléimide.

A noter qu'au départ d'orthoaminophénol, on est conduit à des composés comprenant des mélanges à base de :
N-[(méth)allyloxy-2 phényl]maléimide + N-[(méth)allyloxy-2 (méth)allyl-3 phényl]maléimide + N [(méth)allyloxy-2 (méth)allyl-5 phényl]maléimide + éventuellement N-[(méth)allyloxy-2 di(méth)allyl-3,5 phényl]maléimide. A noter encore qu'au départ de paraminophénol, on est conduit à des composés comprenant des mélanges à base de :
N-[(méth)allyloxy-4 phényl]maléimide + N-[(méth)allyoxy-4 (méth)allyl-3 phényl]maléimide + éventuellement N-[(méth)allyloxy-4 di(méth)allyl-3,5 phényl]maléimide.

S'agissant du réactif facultatif ($d_3$), il est choisi parmi : les vinylpyridines, la N-vinylpyrrolidone, l'isocyanurate d'allyle, le triallylisocyanurate, le vinyltétrahydrofuranne.

La réactivité des constituants (a), (b), (c) et éventuellement (d) du milieu de polymérisation selon l'invention peut être accrue, par exemple lorsque les applications envisagées demandent de réaliser des opérations de moulage par injection sur machine, par addition d'un catalyseur (e) qui peut être soit ($e_1$) un initiateur de polymérisation radicalaire tel que par exemple, le péroxyde de dicumyle, le péroxyde de lauroyle, l'azobisisobutyronitrile, soit ($e_2$) un composé imidazole.

Ledit composé imidazole ($e_2$) répond à la formule générale :

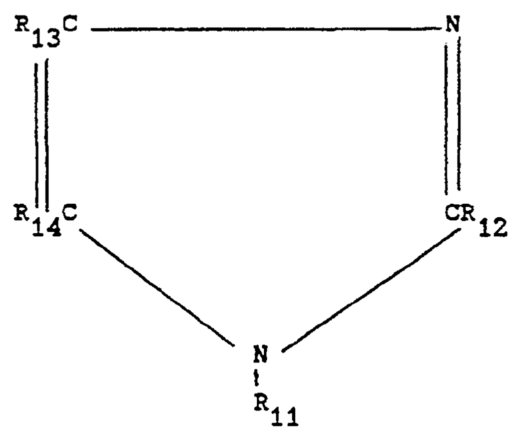
(X)

dans laquelle $R_{11}$, $R_{12}$, $R_{13}$ et $R_{14}$, identiques ou différents, représentent chacun : un atome d'hydrogène, un radical alkyle ou alcoxy ayant de 1 à 20 atomes de carbone, vinyl, phényle, nitro, $R_{13}$ pouvant former avec $R_{14}$ et les atomes de carbone auxquels sont liés ces radicaux un cycle unique comme par exemple un cycle benzénique, $R_{11}$ pouvant également représenter un groupement carbonyle lié à un deuxième cycle imidazole.

Comme exemples spécifiques de composés imidazole ($e_2$), on peut citer en particulier : l'imidazole ou glyxoaline, le méthyl-1 imidazole, le vinyl-2 imidazole, le diméthyl-1,2 imidazole, le vinyl-1 imidazole, le vinyl-1 méthyl-2 imidazole, le benzimidazole, le carbonyldiimidazole.

Dans les polymères thermostables qui viennent d'être définis, on choisit les quantités de réactifs (a) et (c) de manière à avoir, en poids par rapport au pois total de ces constituants :

— de 50 à 98% et, de préférence, de 70 à 90% de bis-maléimide(s) (a) de formule (I),
— de 2 à 50% et, de préférence, de 10 à 30% de diamine(s) (c) de formules (III), (IV) et/ou (V).

S'agissant de la quantité de bis-maléimide siloxane (b) de formule (II), elle représente généralement moins de 40% et, de préférence, de 5 à 30% du poids total des réactifs (a) + (c). Plus préférentiellement encore, cette quantité représente de 10 à 20% du poids total des réactifs (a) + (c).

S'agissant de la quantité du réactif facultatif (d), elle représente généralement moins de 60% et, de préférence, de 5% à 50% du poids total des réactifs (a) + (c).

S'agissant du catalyseur facultatif (e), selon sa nature et selon la vitesse de polymérisation souhaitée au stade de la mise en oeuvre, on l'utilise à un taux se situant dans l'intervalle allant de 0,01 à 1% en poids par rapport à l'ensemble des réactifs (a) + (b) + (c) + éventuellement (d) et, de préférence, allant de 0,05 à 0,5%.

Les polymères selon l'invention peuvent être préparés par chauffage direct du réactif (a), du réactif (b), du réactif (c) et éventuellement du réactif (d) avec au besoin le catalyseur (e) au moins jusqu'à l'obtention d'un mélange liquide homogène. La température peut varier en fonction de l'état physique des composés en présence mais elle se situe généralement entre 50°C et 300°C. Il est avantageux d'amener et de maintenir les composés de départ dans un état de mélange intime avant et pendant le chauffage à l'aide par exemple d'une bonne agitation. Quand on utilise le composé (e), celui-ci est de préférence ajouté au départ dans le mélange

réactionnel bien agité contenant les réactifs. Lorsque ce composé est particulièrement actif, pour éviter son encapsulation dans le réseau polymère engendré, il est souhaitable de l'ajouter dans un solvant ou diluant compatible avec le milieu réactionnel ; on a trouvé qu'il pouvait être intéressant d'utiliser somme solvant ou diluant soit le réactif (b), soit encore un des liquides organiques polaires dont on parle ci-après.

La préparation des polymères selon l'invention peut aussi être effectuée par chauffage du mélange des réactifs au sein d'un diluant organique qui est liquide dans une partie au moins de l'intervalle 50°C-250°C. Parmi ces diluants, on peut mentionner en particulier des hydrocarbures aromatiques comme les xylènes et le toluène, des hydrocarbures halogénés comme les chlorobenzènes, des solvants polaires comme le dioxanne, le tétrahydrofuranne et l'oxyde de dibutyle, le diméthylformamide, le diméthylsulfoxyde, la N-méthylpyrrolidone, le diméthylacétamide, le méthylglycol, le cyclohexanone de la méthyl-éthyl-cétone. Les solutions ou suspensions de polymères peuvent être utilisées telles quelles pour de nombreux emplois ; on peut également isoler les polymères, par exemple par filtration, éventuellement après précipitation au moyen d'un diluant organique miscible avec le solvant utilisé. Dans ce contexte, on peut utiliser avantageusement un hydrocarbure dont le point d'ébullition ne dépasse pas notablement 120°C.

Il doit être compris que les propriétés des polymères selon l'invention peuvent varier dans une large mesure en fonction notamment de la nature exacte des réactifs engagés, des proportions de réactifs choisies et des conditions précises de température adoptées dans l'intervalle précédemment mentionné. En ce qui concerne les polymères obtenus, ceux-ci peuvent être des polymères durcis, insolubles dans les solvants usuels tels que par exemple les composés cités dans le paragraphe précédent et ne présentant pas de ramollissement notable au dessous de la température à laquelle ils commencent à se dégrader.

Mais ces polymères peuvent également se présenter sous l'aspect de prépolymères (P) solubles dans les solvants organiques polaires et présentant un point de ramollissement à une température inférieure à 200°C (en général ce point de ramollissement est compris entre 50° et 150°C). Ces prépolymères peuvent être obtenus en masse en chauffant le mélange des réactifs jusqu'à l'obtention d'un produit homogène ou pâteux à une température généralement située entre 50° et 180°C pendant une durée qui peut aller de quelques minutes à quelques heures, cette durée étant d'autant plus brève que la température adoptée est plus élevée. Avant de soumettre le mélange des réactifs au chauffage, il est avantageux là aussi d'en effectuer par agitation un mélange intime préalable. Il existe là aussi une méthode préférée de mise en oeuvre du composé (e) et il s'agit de celle indiquée ci-avant à propos de la préparation directe de polymères durcis. La préparation des prépolymères peut également être effectuée en suspension ou en solution dans un diluant qui est liquide dans une partie au moins de l'intervalle 50°-180°C.

Il faut noter que ces prépolymères (P) peuvent également être obtenus en formant, à partir des réactifs (a) et (c), un prépolymère (PP) qui est ensuite mis à réagir avec le réactif (b) et au besoin les composés (d) et/ou (e). On peut encore préparer au préalable un prépolymère (P'P') en chauffant le mélange des réactifs (b) et (c) puis en le faisant réagir avec le réactif (a) et au besoin les composés (d) et/ou (e) pour obtenir le prépolymère (P). Les conditions de température et de durée utilisées pour la préparation des prépolymères (PP) ou (P'P') et pour leur transformation en prépolymères (P) sont celles indiquées ci-avant à propos de la préparation des prépolymères (P) par mélange direct des réactifs (a), (b), (c) et éventuellement (d) avec au besoin le composé (e).

Les prépolymères (P) peuvent être utilisés à l'état de masse liquide, une simple coulée à chaud suffisant pour la mise en forme et la réalisation d'objets moulés. On peut aussi, après refroidissement et broyage, les utiliser sous la forme de poudres qui se prêtent remarquablement aux opérations de moulage par compression, éventuellement en présence de charges à l'état de poudres, de sphères, de granules, de fibres ou de paillettes. Sous la forme de suspensions ou de solutions, les prépolymères (P) peuvent être utilisés pour la réalisation de revêtements et d'articles intermédiaires préimprégnés dont l'armature peut être constituée par des matières fibreuses à base de silicate ou d'oxyde d'aluminium ou de zirconium, de carbone, de graphite, de bore, d'amiante ou de verre. On peut encore utiliser ces prépolymères (P) pour la réalisation de matériaux cellulaires après incorporation d'un agent porogène tel que par exemple l'azodicarbonamide.

Dans un second stade, les prépolymères (P) peuvent être durcis par chauffage jusqu'à des températures de l'ordre de 300°C, généralement comprises entre 150° et 250°C ; une mise en forme complémentaire peut être effectuée pendant le durcissement, éventuellement sous vide ou sous une pression super-atmosphérique, ces opérations pouvant également être consécutives.

On ne sort pas du cadre de l'invention si l'on prépare des polymères selon l'invention, quine sont par sous l'aspect de prépolymères (P), en utilisant un mélange intime de prépolymère (PP), de réactif (b) et au besoin de composés (d) et/ou (e) ou un mélange intime de prépolymère (P'P'), le réactif (a) et au besoin de composés (d) et/ou (e) que l'on chauffe en masse dans les conditions décrites précédemment.

Les polymères selon l'invention intéressent les domaines de l'industrie qui requièrent des matériaux doués de bonnes propriétés mécaniques et électriques ainsi que d'une grande inertie chimique à des températures

de 200° à 300°C. A titre d'exemples, ils conviennent pour la fabrication d'isolants en plaques ou tubulaires pour transformateurs électriques, de supports de circuits imprimés, de pignons, de bagues, etc... Les articles préimprégnés sont utilisables pour la réalisation des pièces ayant des formes et des fonctions variées dans de nombreuses industries comme par exemple dans l'aéronautique. Ces pièces, appelées stratifiés, qui peuvent être des pièces de révolution sont obtenues par placage de plusieurs couches de préimprégnés sur une forme ou un support. On peut utiliser aussi les préimprégnés comme renforts ou comme moyen de réparation de pièces détériorées. Il est aussi possible de concevoir des pièces selon les techniques de l'enroulement filamentaire avec ou sans support ; il est encore possible de faire du moulage par injection ou de la pultrusion. On rappellera que pour faire par exemple des objets moulés, il est possible de partir, soit du mélange des réactifs, soit d'un prépolymère (P). Quand on part directement du mélange des réactifs, on donne à ce mélange la forme de l'objet désiré et on effectue ensuite le durcissement par chauffage. Quand on part du prépolymère (P), il peut être moulé par simple coulée à chaud où par injection et on provoque ensuite son durcissement par chauffage.

Les exemples suivant sont donnés à titre illustratif mais non limitatif.

EXEMPLE 1

1. Exemple de mise en oeuvre de la présente invention :

Dans un réacteur en verre, muni d'un agitateur de type ancre et d'une tubulure latérale permettant le départ de produits volatils, on introduit à température ambiante :

— 100 g (0,279 mole) de N,N'-4,4'-diphénylméthane-bis-maléimide, et

— 22 g (0,111 mole) de diamino-4,4' diphénylméthane.

Le mélange réactionnel, sous agitation, est porté à une température de 170°C pendant 5 minutes, puis il est refroidi rapidement jusqu'à 140°C. Arrivé à cette température, on procède à un dégazage et on introduit ensuite, sous agitation, 22 g (0,019 mole) du bis-maléimide à groupement diorganopolysiloxane qui est décrit dans le paragraphe 2 ci-après.

On coule ensuite le mélange réactionnel dans un moule préchauffé à 150°C dans le but de préparer des plaques de dimensions 140 × 100 × 4 mm qui vont subir, en étuve ventilée, le cycle de cuisson suivant :

- 100 minutes entre 150°C et 250°C (vitesse de montée en température de l'ordre de 1°C/minute),
- 16 heures à 250°C, et
- 2 heures entre 250°C et 25°C (vitesse de refroidissement de l'ordre de 2°C/minute).

Après démoulage, les plaques à base de polymère durci sont découpées pour obtenir des éprouvettes :

- dimensions 30 × 7 × 4 mm sur lesquelles on mesure la résistance à la rupture (Rf) et le module (Mf) en flexion (selon la norme/ASTM D 790-71) ;
- de dimensions 60 × 10 × 4 mm sur lesquelles sont réalisés à 25°C des essais de choc CHARPY non entaillé pour mesurer la résilience surfacique (Rc) (selon la norme NFT 51035) ;
- de dimensions 50 × 10 × 4 mm sur lesquelles on mesure la température de transition vitreuse (Tg) par DMA ("Dynamic Mechanical Analysis" ou Analyse Mécanique Dynamique). Les valeurs de Tg sont déterminées à partir des courbes de module en flexion en fonction de la température obtenues par Analyse Mécanique Dynamique réalisée sur un appareil dit DMA 983 de la société DU PONT. La plage de températures balayée s'étend de 25°C à 400°C avec une vitesse de montée en température de 3°C/minutes sous atmosphère inerte. La fréquence de résonnance est de 20 Hz. Les données sont recueillies et traitées par l'appareil dit Analyseur DU PONT 1090.

A titre d'essai comparatif, on a reproduit les opérations décrites ci-avant, mais en utilisant les réactifs suivants :

— 100 g (0,279 mole) de N,N'-4,4' diphénylméthane-bis-maléimide, et

— 22 g (0,111 mole) de diamino-4,4' diphénylméthane.

Ces réactifs sont introduits en 4 minutes dans le réacteur préchauffé à 160°C. On dégaze ensuite pendant 1 minute, puis on laisse réagir à 160°C pendant 9 minutes supplémentaires.

Les valeurs des propriétés mécaniques sont rassemblées dans le tableau suivant :

| | Rf initiale en MPa | | Mf initial en MPa | | Rc initiale en kJ/m² | Tg en °C |
|---|---|---|---|---|---|---|
| | à 25°C | à 250°C | à 25°C | à 250°C | à 25° C | |
| EX1 | 98 | 50 | 2550 | 1300 | 9 | 260 |
| Essai | 226 | 93,2 | 3400 | 1500 | 5 | 300 |

2. Description du procédé de préparation du bis-maléimide à groupement diorganopolysiloxane utilisé dans l'exemple 1 :

Ce bis-maléimide présente la formule suivante :

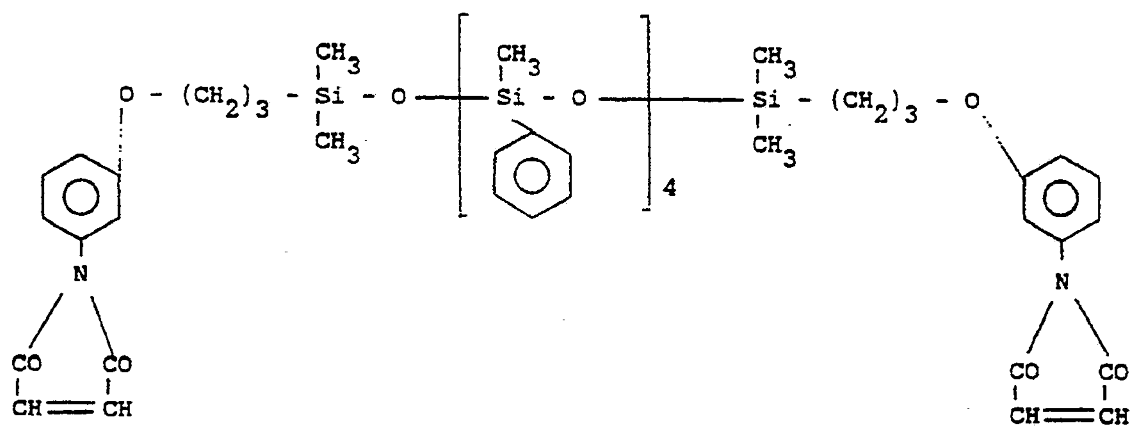

2.1 Préparation de la diamine à groupement diorganopolysiloxane de laquelle dérive ce bis-maléimide :

Dans un réacteur en verre muni d'une agitation centrale, d'une ampoule de coulée et d'un réfrigérant ascendant dans lequel on établit une légère surpression d'azote sec, on charge 312 g (0,46 mole) d'un alpha,oméga-bis-(hydrogéno)diorganopolysiloxane de formule :

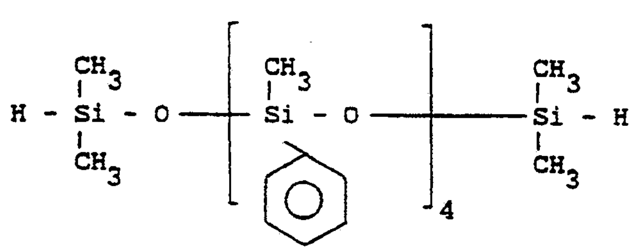

ayant une masse moléculaire de l'ordre de 678 g.

On introduit ensuite le réacteur dans un bain d'huile préchauffé à 55°C, puis on additionne le catalyseur. Ce dernier est le catalyseur de Karsted (complexe à base de platine élémentaire et de ligans divinyl-1,3 tétraméthyl-1,1,3,3 disiloxane) : il est en solution dans le toluène (concentration de 3,5% en poids) et on introduit avec une seringue 1,49 cm³ de cette solution de catalyseur ; le rapport r (poids de platine élémentaire

engagé/poids de la masse réactionnelle) est égale à $91.10^{-6}$.

Dans le réacteur, on coule ensuite progressivement 137 g (0,92 mole) de métaallyloxyaniline, pendant une durée de 60 minutes, de façon à contrôler l'exothermicité de la réaction. Trente minutes après la fin de la coulée, on revient à température ambiante. Le produit obtenu d'un poids de 448,9 g, est une huile visqueuse limpide, de couleur brun-orangé, présentant un spectre de RMN du proton en accord avec la structure :

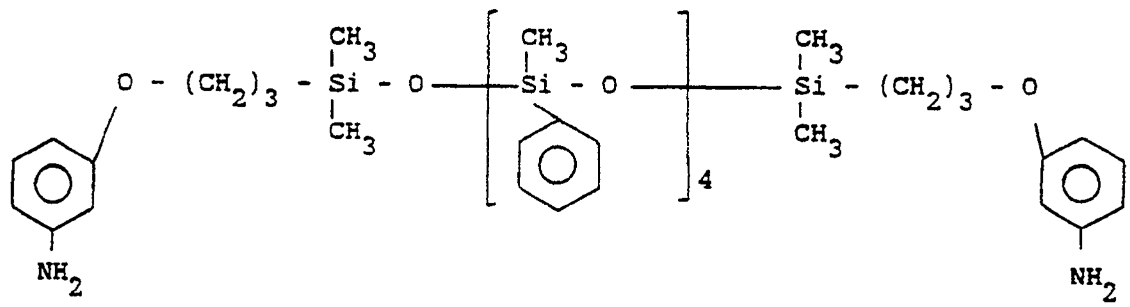

La masse moléculaire est de l'ordre de 976 g. Dans ces conditions, le taux de transformation des réactifs engagés est de 100% (par RMN et analyse infra-rouge, on ne détecte ni d'amine, ni d'oligomère siloxane hydrogéné) et le rendement en poids en diamine souhaitée est de 100%.

2.2 Préparation du bis-maléimide diorganopolysiloxane :

Dans un réacteur en verre muni d'une agitation centrale, et d'un réfrigérant ascendant dans lequel on établit une légère surpression d'azote sec et qui est placé dans un bain d'huile préchauffé à 55°C, on introduit simultanément, en 10 minutes, à l'aide de 2 ampoules de coulée :

— 20 $cm^3$ d'une solution dans l'acétone de 25 g (0,025 mole et 0,02 fonction $NH_2$) de la diamine siloxane préparée au paragraphe 2.1,

— 15 $cm^3$ d'une solution dans l'acétone de 6,4 g (0,055 mole) d'anhydride maléique.

Lorsque les coulées sont terminées, chaque ampoule est rincée par 5 $cm^3$ d'acétone, qui sont ensuite rajoutés à la masse réactionnelle maintenue sous agitation pendant encore 15 minutes.

Dans l'ampoule de coulée ayant contenu l'anhydride maléique, on charge 6,1 g (0,06 mole) d'anhydride acétique et, dans l'autre ampoule, on charge 1,67 g (0,0165 mole) de triéthylamine.

Ces deux composés sont alors coulés dans le réacteur, puis on ajoute 0,3 $cm^3$ d'une solution aqueuse contenant 0,0528 mole d'acétate de nickel pour 100 $cm^3$ de solution.

Le mélange réactionnel est maintenu à reflux sous agitation pendant 2 heures 30 minutes. La température est ensuite abaissée à 20°C.

Le mélange réactionnel est diluée avec 80 $cm^3$ d'eau glacée (5°C) sous forte agitation et on extrait ensuite avec 80 $cm^3$ d'acétate d'éthyle le produit huileux présent. La phase organique obtenue est lavée avec trois fois 80 $cm^3$ d'eau pour arriver à pH6 dans les eaux de lavage, puis séchée pendant 2 heures sur sulfate de sodium anhydre. Après filtration, on élimine par évaporation l'acétate d'éthyle de la phase organique en terminant cette opération sous pression réduite (70 Pa environ) à 60°C et on recueille 27,3 g (soit un rendement en poids de 96% par rapport à la théorie) d'un produit visqueux, brun-orangé, dont le spectre RMN est en accord avec la structure du bis-maléimide souhaité qui a été définie au début de cet exemple. La masse moléculaire est de l'ordre de 1136 g. En RMN du proton (solvant : $CDCl_3$ ; référence : tétraméthylsilane), on note l'absence de la diamine de départ et on note les déplacements chimiques suivants exprimés en ppm :

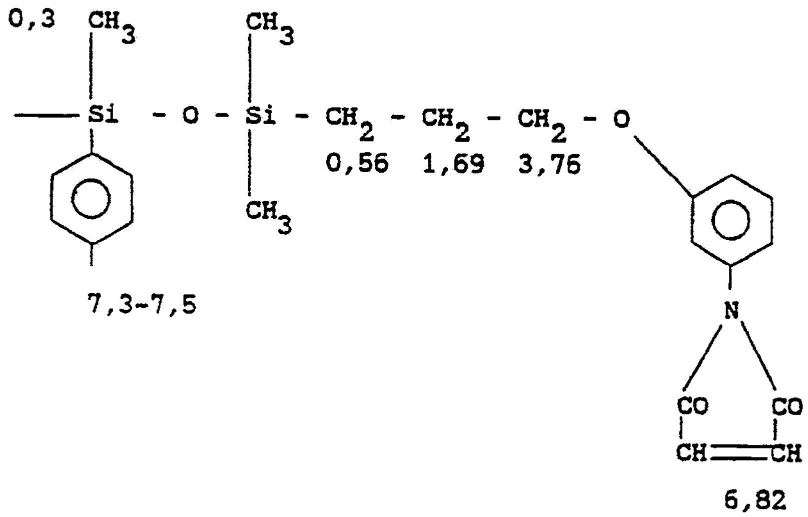

Le rapport : $\dfrac{\text{nombre de liaisons Si-phényle}}{\text{nombre de liaisons Si-méthyle}}$

est trouvé égal à 0,5.

En spectrométrie infra-rouge, on note la présence des bandes suivantes : ν (C=O imide) = 1710 – 1730 $cm^{-1}$ ; ν (C-N-C maléimide) = 1160 $cm^{-1}$ ; ν (C-N-C) = 1400 $cm^{-1}$.

EXEMPLE 2

Dans le réacteur utilisé à l'exemple 1, on introduit à température ambiante :

— 100 g (0,279 mole) de N,N'-4,4'-diphénylméthane-bis-maléimide, et

— 22 g (0,078 mole) de diamino-4,4' diéthyl-3,3' diméthyl-5,5' diphénylméthane.

Le mélange est fondu en le portant à 170°C, sous agitation, pendant 10 minutes, puis il est dégazé et refroidi à 140°C. On introduit alors, sous agitation, 22 g (0,019 mole) du bis-maléimide à groupement diorganopolysiloxane, qui est décrit dans l'exemple 1, en mélange avec 0,18 g d'imidazole.

Le mélange réactionnel est ensuite moulé, durci et testé comme indiqué ci-avant à l'exemple 1.

Les valeurs des propriétés mécaniques sont les suivantes :

— Résultats en flexion :

• à 25°C :

| | |
|---|---|
| Rf initiale = | 103 MPa |
| Mf initial = | 2900 MPa (après un vieillissement de 1000 heures à 250°C, cette valeur demeure inchangée). |

• 250°C :

| | |
|---|---|
| Rf initiale = | 40 MPa |
| Mf initial = | 1500 MPa |

— Résilience surfacique :

• à 25°C :

| | |
|---|---|
| Rc initiale = | 10 kJ/$m^2$ (après un vieillissement de 1000 heures à 250°C, cette valeur passe à 5kJ/$m^2$). |

— Tg par DMA = 290°C.

Par ailleurs, on a mesuré le temps de gel du prépolymère conforme à cet exemple. Il est mesuré sur un mélange de 10 g des réactifs de départ à l'aide d'un appareil SUNSHINE : le temps zéro est défini par la plongée

du tube contenant ledit mélange dans un bain thermostaté à la température de la mesure ; le temps de gel à 160°C est trouvé égal à 19 minutes.

EXEMPLE 3

Dans le réacteur utilisé à l'exemple 1, on introduit à température ambiante :

— 100 g (0,279 mole) de N,N'-4,4'-diphénylméthane-bis-maléimide, et

— 22 g (0,078 mole) de diamino-4,4'-diéthyl-3,3'-diméthyl-5,5' diphénylméthane.

La masse réactionnelle est fondue en la portant à 170°C, sous agitation, pendant 10 minutes, puis elle est dégazée et refroidie à 140°C. On introduit alors, sous agitation, un mélange constitué de 22 g (0,019 mole) du bis-maléimide à groupement diorganopolysiloxane, qui est décrit ci-avant dans l'exemple 1, et de 10 g (0,090 mole) de N-vinylpyrrolidone-2.

Le temps de gel du prépolymère conforme à cet exemple est de 15 minutes.

La masse réactionnelle est ensuite moulée, durcie et testée comme indiqué ci-avant à l'exemple 1.

Les valeurs des propriétés mécaniques sont les suivantes :

— Résultats en flexion :

• à 25°C :

Rf initiale = 110 MPa

Mf initial = 3000 MPa (après un vieillissement de 1000 heures à 250°C, cette valeur demeure inchangée).

• 250°C :

Rf initiale = 55 MPa

Mf initial = 1600 MPa

— Résilience surfacique :

• à 25°C :

Rc initiale = 11 kJ/m$^2$ (après un vieillissement de 1000 heures à 250°C, cette valeur passe à 5,5 KJ/m$^2$).

— Tg par DMA = 280°C.

## Revendications

### Revendications pour les Etats contractants suivants : AT, BE, CH, DE, FR, GB, IT, LI, LU, NL, SE

1. Polymères à groupements imides caractérisés en ce qu'ils comprennent le produit de réaction à une température allant de 50°C à 300°C, entre :

— (a) 50 à 98% par rapport au poids total des réactifs (a) + (c) d'un N,N'-bis-maléimide ou d'une association de plusieurs bis-maléimides de formule :

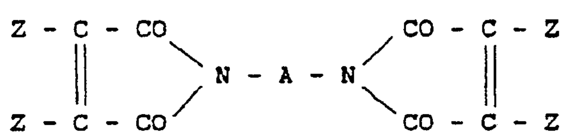

(I)

dans laquelle :

• les symboles Z, identiques ou différents, représentent chacun H, $CH_3$ ou Cl ;

• le symbole A représente un radical divalent choisi dans le groupe constitué par les radicaux : cyclohexylènes ; phénylènes ; méthyl-4 phénylènes-1,3 ; méthyl-2 phénylène-1,3 ; méthyl-5 phénylène-1,3; diétyl-2,5 méthyl-3 phénylène-1,4 ; et les radicaux de formule :

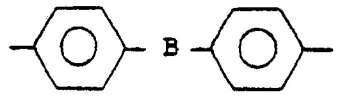

dans laquelle B représente un lien valentiel simple ou un groupement :

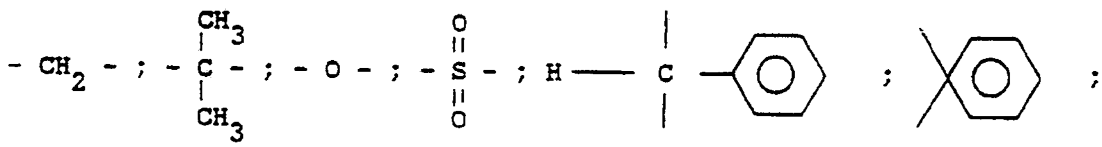

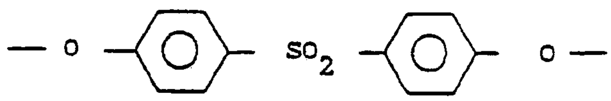

— (b) au moins 5% et moins de 40% du poids total des réactifs (a) + (c) d'un N,N'-bis-maléimide à groupement diorganopolysiloxane répondant essentiellement à la formule générale :

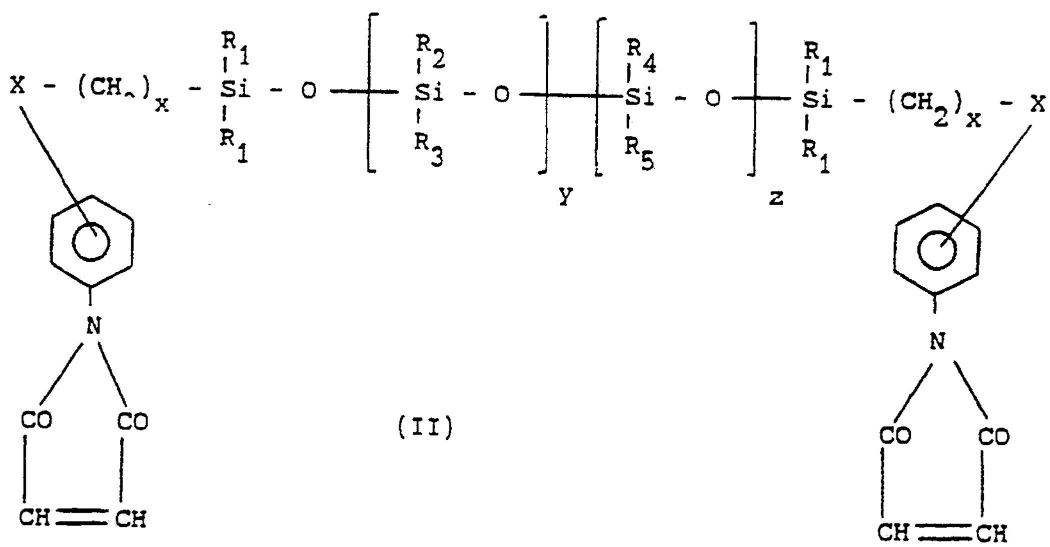

(II)

dans laquelle :

• X, qui est en position ortho, méta ou para par rapport à l'atome de carbone du cycle benzénique relié à l'azote, représente un atome ou groupement suivant :

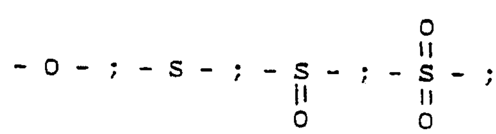

• $R_1$, $R_2$, $R_3$, $R_4$ et $R_5$, identiques ou différents, représentent chacun un radical hydrocarboné, monovalent choisi parmi : les radicaux alkyles, linéaires ou ramifiés, ayant de 1 à 12 atomes de carbone, ces radicaux pouvant être substitués par un ou plusieurs atomes de chlore, de brome ou de fluor ou par groupement —CN ; un radical phényle éventuellement substitué par un ou plusieurs radicaux alkyles et/ou alkoxy ayant de 1 à 4 atomes de carbone ou par un ou plusieurs atomes de chlore ;

- le symbole X est un nombre entier situé dans l'intervalle allant de 2 à 8.
- les symboles y et z représentent des nombres, identiques ou différents, entiers ou fractionnaires, dont la somme se situe dans l'intervalle allant de 0 à 100 ;

— (c) 2 à 50% par rapport au poids total des réactifs (a) + (c) d'une ou plusieurs diamines biprimaires prises dans le groupe formé par :

* (c1) les espèces répondant à la formule générale :

$$H_2N\text{-}E\text{-}NH_2 \quad (III)$$

dans laquelle le symbole E représente l'un des radicaux divalents que représentent le symbole A de la formule (I), les symboles A et E contenus dans un même polymère pouvant être identiques ou différents entre eux ;

* (c2) les espèces répondant à la formule générale :

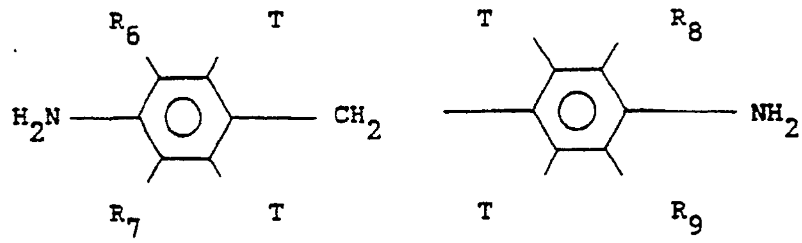
(IV)

dans laquelle :

- les symboles $R_6$, $R_7$, $R_8$ et $R_9$, identiques ou différents, représentent chacun un radical méthyle, éthyle, propyle ou isopropyle ;
- les symboles T, identiques ou différents, représentent chacun un atome d'hydrogène ou un atome de chlore ;

* et (c3) les espèces répondant à la formule générale :

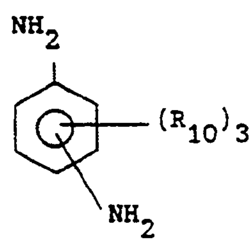
(V)

dans laquelle :

- les radicaux amino sont en position méta ou para, l'un par rapport à l'autre ;
- les symboles $R_{10}$, identiques ou différents, représentent chacun un radical méthyle, éthyle, propyle ou isopropyle ;

— (d) éventuellement un ou plusieurs monomères autres qu'un bis-maléimide de formule (I) ou de formule (II) et comportant une ou plusieurs doubles liaisons carbone-carbone polymérisables ;

— et (e) éventuellement un catalyseur.

2. Polymères selon la revendication 1, caractérisé en ce que le réactif facultatif (d), quand on en utilise un, consiste dans les espèces suivantes :

($d_1$) soit un ou plusieurs monomères de formule :

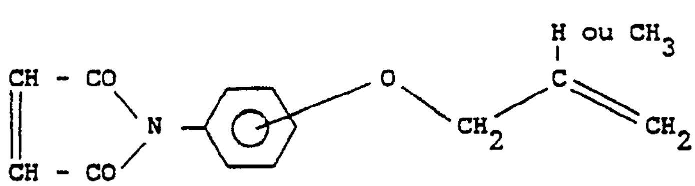
(VII)

dans laquelle le radical allyloxy ou méthallyloxy est en position ortho, mètha ou para par rapport à l'atome de carbone du cycle benzénique relié à l'azote ;

($d_2$) soit un composé comprenant :

— un mélange d'un monomère de formule :

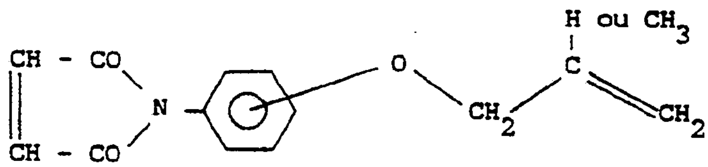

(VII)

dans laquelle le radical allyloxy ou méthallyloxy est en position ortho, mètha ou para par rapport à l'atome de carbone du cycle benzénique relié à l'azote.

— avec :

• au moins un dérivé monosubstitué de formule :

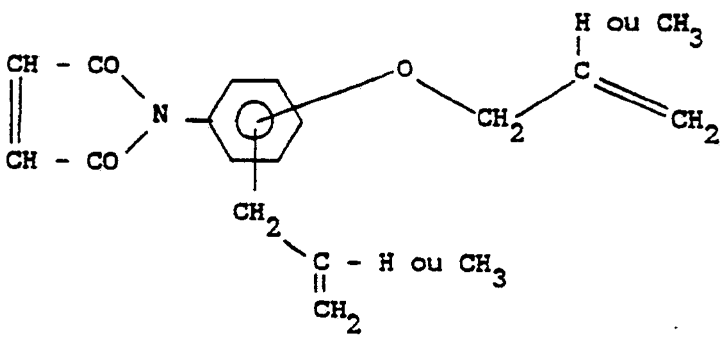

(VIII)

• et éventuellement un ou plusieurs dérivés disubstitués de formule :

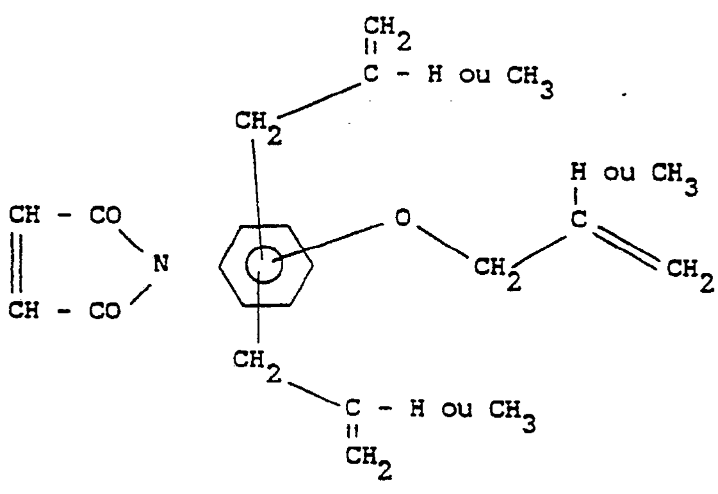

(IX)

($d_3$) soit un ou plusieurs hétérocycles substitués comportant une ou plusieurs doubles liaisons carbone-carbone.

3. Polymères selon l'une quelconque des revendications 1 et 2, caractérisés en ce que le catalyseur (e), quand on en utilise un, est soit ($e_1$) un initiateur de polymérisation radicalaire, soit ($e_2$) un composé imidazole de formule :

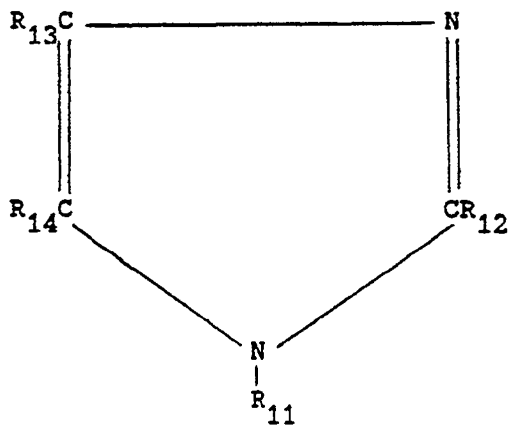

(X)

dans laquelle $R_{11}$, $R_{12}$, $R_{13}$ et $R_{14}$, identiques ou différents, représentent chacun : un atome d'hydrogène, un radical alkyle ou alcoxy ayant de 1 à 20 atomes de carbone, vinyle, phényle, nitro, $R_{13}$ pouvant former avec $R_{14}$ et les atomes de carbone auxquels sont liés ces radicaux un cycle unique comme par exemple un cycle benzénique, $R_{11}$ pouvant également représenter un groupement carbonyle lié à un deuxième cycle imidazole.

4. Polymères selon l'une quelconque des revendications 1 à 3, caractérisés en ce que :

* d'une part : on choisit les quantités de réactifs (a) et (c) de manière à avoir, en poids par rapport au poids total de ces constituants :

— de 70 à 90% de bis-maléimide(s) (a) de formule (I),

— de 10 à 30% de diamines(s) (c) de formule (III), (IV) et/ou (V) ;

* et d'autre part : s'agissant de la quantité de bis-maléimide siloxane (b) de formule (II), elle représente de 5 à 30% du poids total des réactifs (a) + (c).

5. Polymères selon l'une quelconque des revendications 1 à 4, caractérisés en ce que la quantité du réactif facultatif (d), quand on en utilise un, représente moins de 60% et, de préférence, de 5% à 50% du poids total des réactifs (a) + (c).

6. Polymères selon l'une quelconque des revendications 1 à 5, caractérisés en ce que le catalyseur facultatif (e), quand on en utilise un, est employé à un taux se situant dans l'intervalle allant de 0,01 à 1% et, de préférence, de 0,05 à 0,5% en poids par rapport à l'ensemble des réactif (a) + (b) + (c) + éventuellement (d).

7. Polymères selon l'une quelconque des revendications 1 à 6, caractérisés en ce qu'ils se trouvent sous forme de polymères durcis, insolubles dans les solvants usuels et ne présentant pas de ramollissement notable au dessous de la température à laquelle ils commencent à se dégrader.

8. Polymères selon l'une quelconque des revendications 1 à 6, caractérisés en ce qu'ils se trouvent sous forme de prépolymères thermodurcissables (P) solubles dans les solvants organiques polaires et présentent un point de ramollissement à une température inférieure à 200°C.

9. Procédé de préparation de polymères durcis selon les revendications 1 à 7, caractérisé en ce que l'on chauffe directement le mélange des réactifs à une température comprise entre 50° et 300°C en opérant en masse ou au sein d'un diluant organique.

10. Procédé de préparation selon la revendication 9, caractérisé en ce qu'il consiste à chauffer le mélange des réactifs entre 50° et 180°C pour former dans un premier temps un prépolymère (P), puis provoquer le durcissement du prépolymère (P) par chauffage à une température comprise entre 150°C et 250°C.

11. Procédé de préparation de polymères thermoducissables (P) selon les revendications 1 à 6 et 8, caractérisé en ce que l'on chauffe directement le mélange des réactifs à une température comprise entre 50°C et 180°C en opérant en masse ou au sein d'un diluant organique.

12. Procédé de préparation selon l'une quelconque des revendications 9 à 11, caractérisé en ce que, lorsque l'on opère en masse, on utilise comme réactif (b) les bis-maléimides de formule (II) dans lesquels le rapport:

$$\frac{\text{nombre de liaisons Si-phényle (éventuellement substitué)}}{\text{nombre de liaisons Si-alkyle}}$$

est au moins égal à 0,25.

13. Application des prépolymères selon l'une quelconque des revendications 1 à 8 à la fabrication d'objets

moulés, de revêtements, d'articles à structure cellulaire et de matériaux composites renforcés et imprégnés.

**Revendications pour l'Etat contractant suivant : ES**

1. Procédé de préparation de polymères à groupements imides se trouvant sous forme de polymères durcis, insolubles dans les solvants usuels et ne présentant pas de ramollissement notable au-dessous de la température à laquelle ils commencent à se dégrader, caractérisé par le fait que l'on chauffe directement, à une température allant de 50°C à 300°C, le mélange des réactifs suivants :

— (a) 50 à 98% par rapport au poids total des réactifs (a) + (c) d'un N,N'-bis-maléimide ou d'une association de plusieurs bis-maléimides de formule :

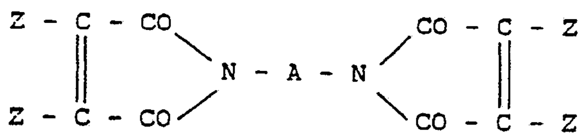

(I)

dans laquelle :

- les symboles Z, identiques ou différents, représentent chacun H, $CH_3$ ou Cl ;
- le symbole A représente un radical divalent choisi dans le groupe constitué par les radicaux : cyclohexylènes ; phénylènes ; méthyl-4 phénylènes-1,3 ; méthyl-2 phénylène-1,3 ; méthyl-5 phénylène-1,3; diéthyl-2,5 méthyl-3 phénylène-1,4 ; et les radicaux de formule :

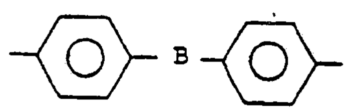

dans laquelle B représente un lien valentiel simple ou un groupement :

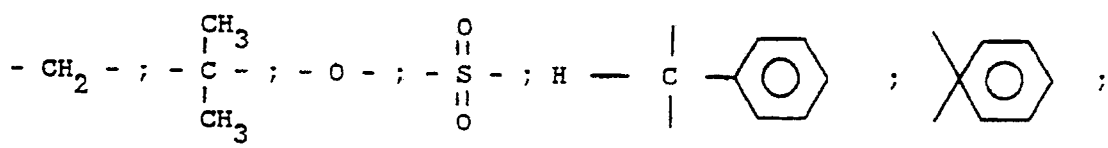

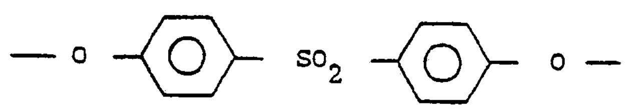

— (b) au moins 5% et moins de 40% du poids total des réactifs (a) + (c) d'un N,N'-bis-maléimide à groupement diorganopolysiloxane répondant essentiellement à la formule générale :

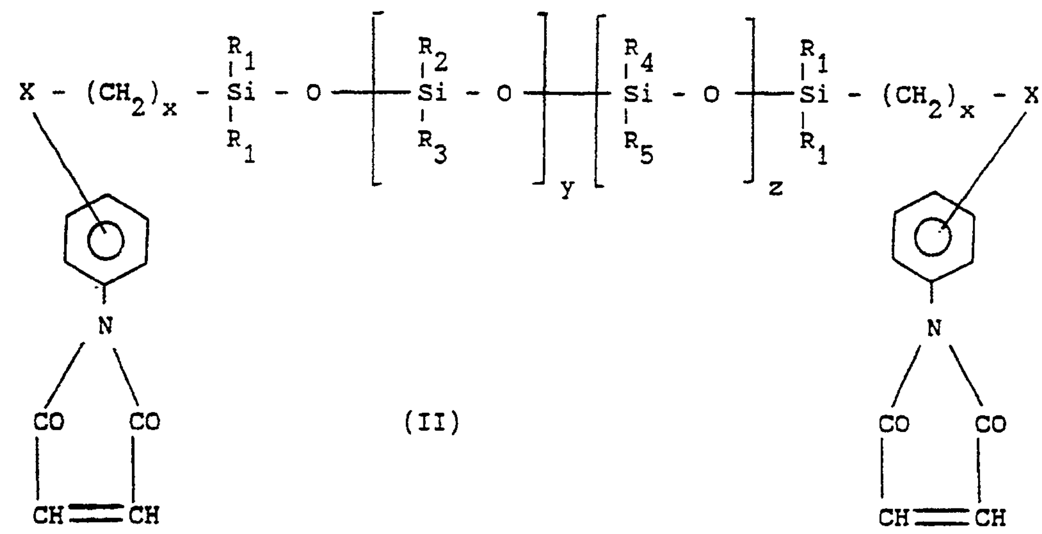

(II)

dans laquelle :

- X, qui est en position ortho, méta ou para par rapport à l'atome de carbone du cycle benzénique relié à l'azote, représente un atome ou groupement suivant :

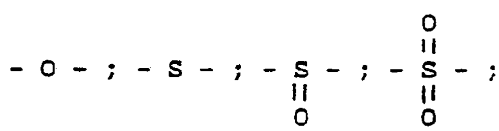

- $R_1$, $R_2$, $R_3$, $R_4$ et $R_5$, identiques ou différents, représentent chacun un radical hydrocarboné monovalent choisi parmi : les radicaux alkyles, linéaires ou ramifiés, ayant de 1 à 12 atomes de carbone, ces radicaux pouvant être substitués par un ou plusieurs atomes de chlore, de brome ou de fluor ou par groupement —CN ; un radical phényle éventuellement substitué par un ou plusieurs radicaux alkyles et/ou alkoxy ayant de 1 à 4 atomes de carbone ou par un ou plusieurs atomes de chlore ;
- le symbole X est un nombre entier situé dans l'intervalle allant de 2 à 8.
- les symboles y et z représentent des nombres, identiques ou différents, entiers ou fractionnaires, dont la somme se situe dans l'intervalle allant de 0 à 100 ;

— (c) 2 à 50% par rapport au poids total des réactifs (a) + (c) d'une ou plusieurs diamines biprimaires prises dans le groupe formé par :

* (c1) les espèces répondant à la formule générale :

$$H_2N\text{-}E\text{-}NH_2 \quad \text{(III)}$$

dans laquelle le symbole E représente l'un des radicaux divalents que représentent la symbole A de la formule (I), les symboles A et E contenus dans un même polymère pouvant être identiques ou différents entre eux ;

* (c2) les espèces répondant à la formule générale :

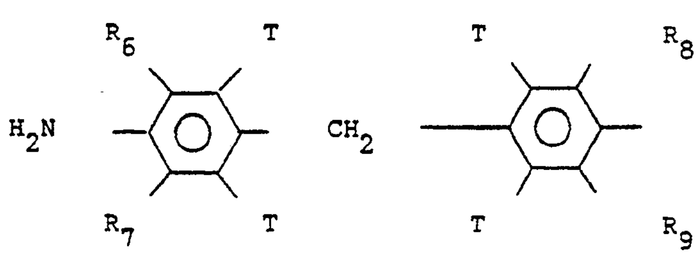

(IV)

dans laquelle :

- les symboles $R_6$, $R_7$, $R_8$ et $R_9$, identiques ou différents, représentent chacun un radical méthyle, éthyle, propyle ou isopropyle ;
- les symboles T, identiques ou différents, représentent chacun un atome d'hydrogène ou un atome de chlore ;

* et (c3) les espèces répondant à la formule générale :

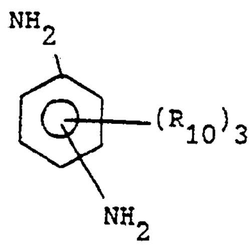 (V)

dans laquelle :

- les radicaux amino sont en position méta ou para, l'un par rapport à l'autre ;
- les symboles $R_{10}$, identiques ou différents, représentent chacun un radical méthyle, éthyle, propyle ou isopropyle ;

— (d) éventuellement un ou plusieurs monomères autres qu'un bis-maléimide de formule (I) ou de formule (II) et comportant une ou plusieurs doubles liaisons carbone-carbone polymérisables ;

— et (e) éventuellement un catalyseur ;

ce procédé étant conduit en opérant en masse ou au sein d'un diluant organique.

2. Procédé de préparation de polymères à groupements imides se trouvant sous forme de prépolymères thermodurcissables (P) solubles dans les solvants organiques polaires et présentant un point de ramollissement à une température inférieure à 200°C, caractérisé par le fait que l'on chauffe directement le mélange des réactifs (a), (b), (c), éventuellement (d) et éventuellement (e) définis ci-avant dans la revendication 1 à une température comprise entre 50°C et 180°C en opérant en masse ou au sein d'un diluant organique.

3. Procédé selon la revendication 1, caractérisé en ce qu'il consiste à chauffer le mélange des réactifs entre 50°C et 180°C pour former dans un premier temps un prépolymère (P), puis provoquer le durcissement du prépolymère (P) par chauffage à une température comprise entre 150°C et 250°C.

4. Procédé selon l'une quelconque des revendications 1 à 3, caractérisé en ce que le réactif facultatif (d), quand on en utilise un, consiste dans les espèces suivantes :

($d_1$) soit un ou plusieurs monomères de formule :

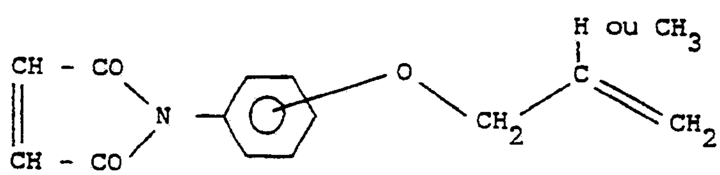 (VII)

dans laquelle le radical allyloxy ou méthallyloxy est en position ortho, métha ou para par rapport à l'atome de carbone du cycle benzénique relié à l'azote ;

($d_2$) soit un composé comprenant :

— un mélange d'un monomère de formule :

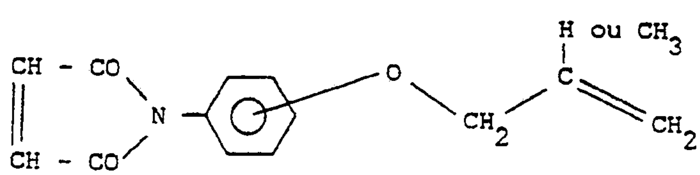 (VII)

dans laquelle le radical allyloxy ou méthallyloxy est en position ortho, métha ou para par rapport à l'atome de carbone du cycle benzénique relié à l'azote.

— avec :

• au moins un dérivé monosubstitué de formule :

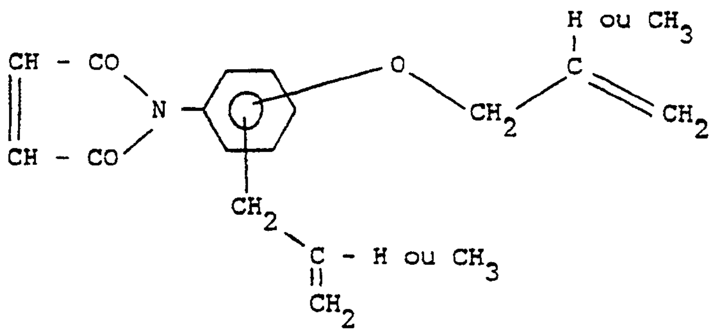

(VIII)

• et éventuellement un ou plusieurs dérivés disubstitués de formule :

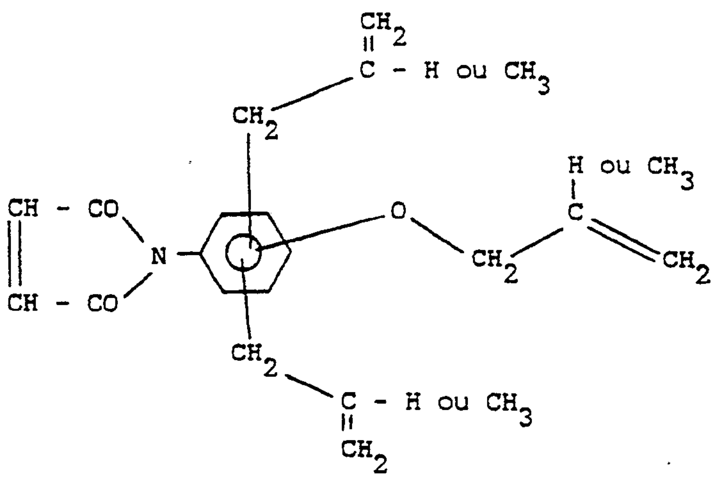

(IX)

($d_3$) soit un ou plusieurs hétérocycles substitués comportant une ou plusieurs doubles liaisons carbone-carbone.

5. Procédé selon l'une quelconque des revendications 1 à 4, caractérisé en ce que le catalyseur (e), quand on en utilise un, est soit ($e_1$) un initiateur de polymérisation radicalaire, soit ($e_2$) un composé imidazole de formule :

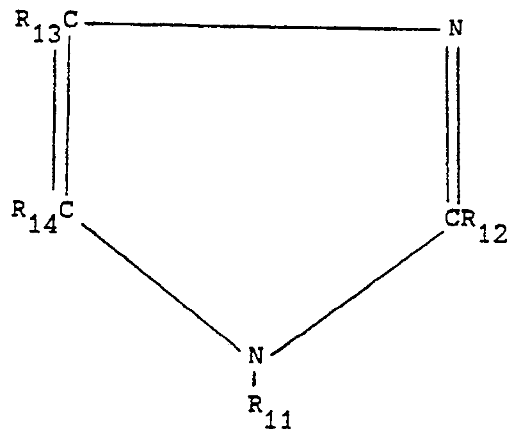

(X)

dans laquelle $R_{11}$, $R_{12}$, $R_{13}$ et $R_{14}$, identiques ou différents, représentent chacun : un atome d'hydrogène, un

radical alkyle ou alcoxy ayant de 1 à 20 atomes de carbone, vinyle, phényle, nitro, $R_{13}$ pouvant former avec $R_{14}$ et les atomes de carbone auxquels sont liés ces radicaux un cycle unique comme par exemple un cycle benzénique, $R_{11}$ pouvant également représenter un groupement carbonyle lié à un deuxième cycle imidazole.

6. Procédé selon l'une quelconque des revendications 1 à 5, caractérisés en ce que :

* d'une part : on choisit les quantités de réactifs (a) et (c) de manière à avoir, en poids par rapport au poids total de ces constituants :

— de 70 à 90% de bis-maléimide(s) (a) de formule (I),

— de 10 à 30% de diamines(s) (c) de formule (III), (IV) et/ou (V) ;

* et d'autre part : s'agissant de la quantité de bis-maléimide siloxane (b) de formule (II), elle représente de 5 à 30% du poids total des réactifs (a) + (c).

7. Procédé selon l'une quelconque des revendications 1 à 6, caractérisés en ce que la quantité du réactif facultatif (d), quand on en utilise un, représente moins de 60% et, de préférence, de 5% à 50% du poids total des réactifs (a) + (c).

8. Procédé selon l'une quelconque des revendications 1 à 7, caractérisés en ce que le catalyseur facultatif (e), quand on en utilise un, est employé à un taux se situant dans l'intervalle allant de 0,01 à 1% et, de préférence, de 0,05 à 0,5% en poids par rapport à l'ensemble des réactif (a) + (b) + (c) + éventuellement (d).

9. Procédé selon l'une quelconque des revendications 1 à 8, caractérisé en ce que, lorsque l'on opère en masse, on utilise comme réactif (b) les bis-maléimides de formule (II) dans lesquels le rapport :

$$\frac{\text{nombre de liaisons Si-phényle (éventuellement substitué)}}{\text{nombre de liaisons Si-alkyle}}$$

est au moins égal à 0,25.

10. Application des polymères préparés selon l'une quelconque des revendications 1 à 9 à la fabrication d'objets moulés, de revêtements, d'articles à structure cellulaire et de matériaux composites renforcés et imprégnés.

## Claims

### Claims for the following Contracting States : AT, BE, CH, DE, FR, GB, IT, LI, LU, NL, SE

1. Polymers containing imide groups, characterised in that they comprise the product of reaction, at a temperature ranging from 50°C to 300°C, between :

(a) 50 to 98% with respect to the total weight of the reactants (a) + (c) of an N,N'-bis(maleimide) or of a combination of several bis(maleimides) of formula :

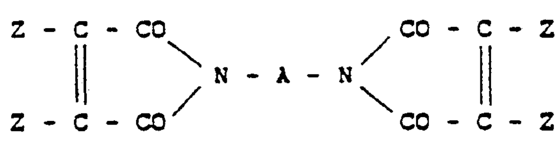

(I)

in which :

the symbols Z, which may be identical or different, each denote H, CH3 or Cl ;

the symbol A denotes a divalent radical chosen from the group consisting of the following radicals : cyclohexylenes ; phenylenes ; 4-methyl-1,3-phenylenes ; 2-methyl-1,3-phenylene ; 5-methyl-1,3-phenylene ; 2,5-diethyl-3-methyl-1,4-phenylene ; and the radicals of formula :

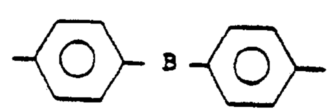

in which B denotes a single valency bond or a group :

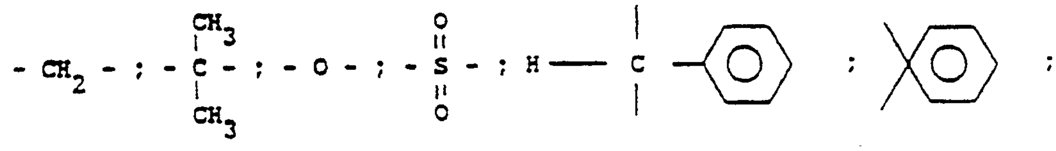

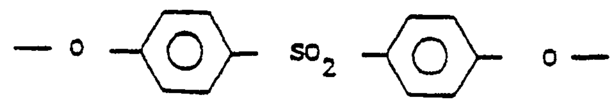

(b) at least 5% and less than 40% of the total weight of the reactants (a) + (c) of an N,N'-bis(maleimide) containing a diorganopolysiloxane group corresponding essentially to the general formula :

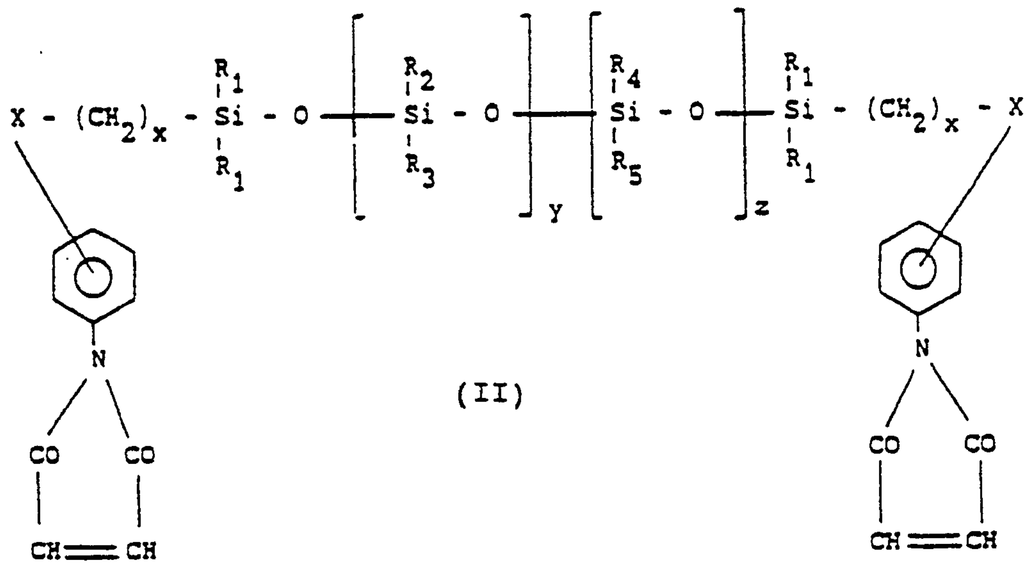

(II)

in which :

X, which is in the ortho, meta or para position with respect to the carbon atom of the benzene ring linked to the nitrogen denotes one of the following atoms or groups :

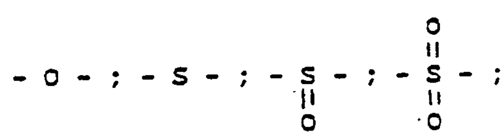

$R_1$, $R_2$, $R_3$, $R_4$ and $R_5$, which may be identical or different, each denote a monovalent hydrocarbon radical chosen from : linear or branched alkyl radicals having from 1 to 12 carbon atoms, it being possible for these radicals to be substituted with one or more chlorine, bromine or fluorine atoms or with a —CN group ; a phenyl radical optionally substituted with one or more alkyl and/or alkoxy radicals having from 1 to 4 carbon atoms or with one or more chlorine atoms ;

the symbol x is an integer falling within the range from 2 to 8 ;

the symbols y and z denote numbers, which may be identical or different, integral or fractional, whose sum falls within the range from 0 to 100 ;

(c) 2 to 50% with respect to the total weight of the reactants (a) + (c) of one or more diprimary diamines selected from the group composed of :

* (c1) the species corresponding to the general formula :

$$H_2N\text{-}E\text{-}NH_2 \quad (III)$$

in which the symbol E denotes one of the divalent radicals denoted by the symbol A of the formula (I), it being possible for the symbols A and E present in the same polymer to be identical to or different from one another ;

* (c2) the species corresponding to the general formula :

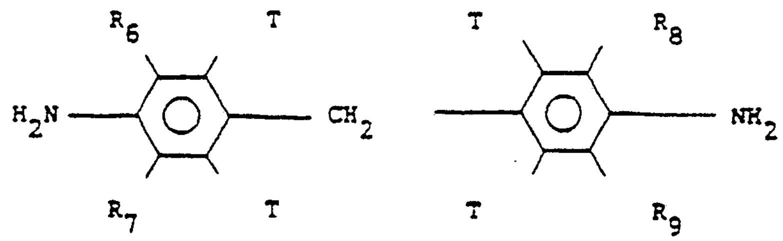

(IV)

in which :

the symbols $R_6$, $R_7$, $R_8$ and $R_9$, which may be identical or different, each denote a methyl, ethyl, propyl or isopropyl radical ;

the symbols T, which may be identical or different, each denote a hydrogen atom or a chlorine atom ; and

* (c3) the species corresponding to the general formula :

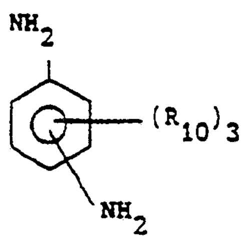

(V)

in which :

the amino radicals are in the meta or para position with respect to one another ;

the symbols $R_{10}$, which may be identical or different, each denote a methyl, ethyl, propyl or isopropyl radical;

(d) optionally, one or more monomers other than a bis(maleimide) of formula (I) or of formula (II) and containing one or more polymerisable carbon-carbon double bonds ; and

(e) optionally, a catalyst.

2. Polymers according to claim 1, characterised in that the optional reactant (d), when one is used, consists of the following species :

($d_1$) either one or more monomers of formula :

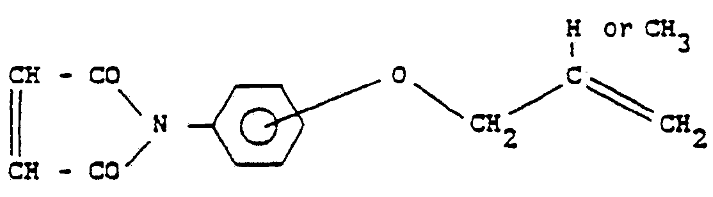

(VII)

in which the allyloxy or methallyloxy radical is in the ortho, meta or para position with respect to the carbon atom of the benzene ring linked to the nitrogen ;

($d_2$) or a compound comprising :

— a mixture of a monomer of formula :

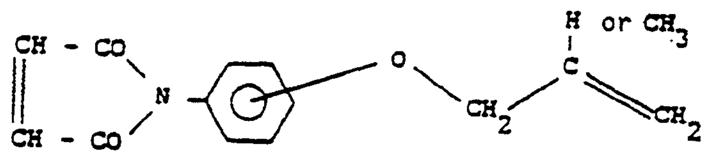

(VII)

in which the allyloxy or methallyloxy radical is in the ortho, meta or para position with respect to the carbon atom of the benzene ring linked to the nitrogen ;

— with :

- at least one monosubstituted derivative of formula :

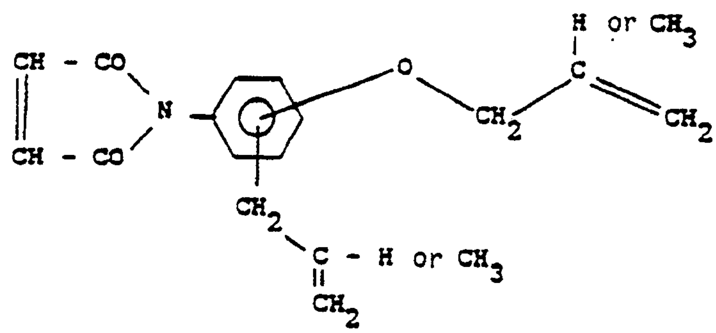

(VIII)

- and optionally one or more disubstituted derivatives of formula :

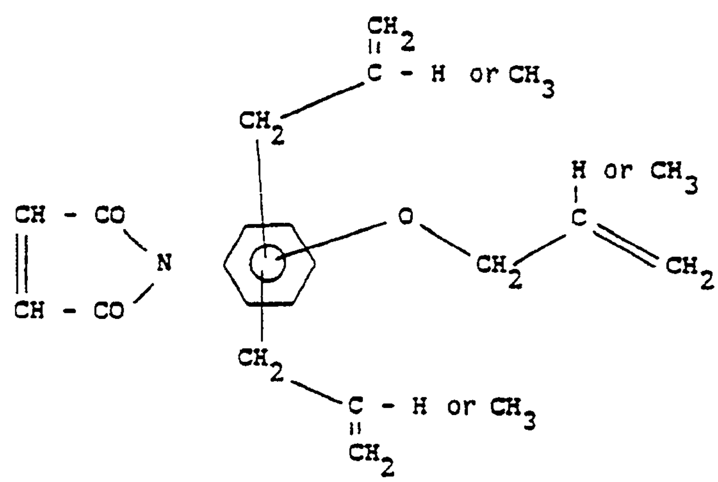

(IX)

($d_3$) or one or more substituted heterocyclic compounds containing one or more carbon-carbon double bonds.

3. Polymers according to either of claims 1 and 2, characterised in that the catalyst (e), when one is used, is either ($e_1$) a free-radical polymerisation initiator, or ($e_2$) an imidazole compound of formula :

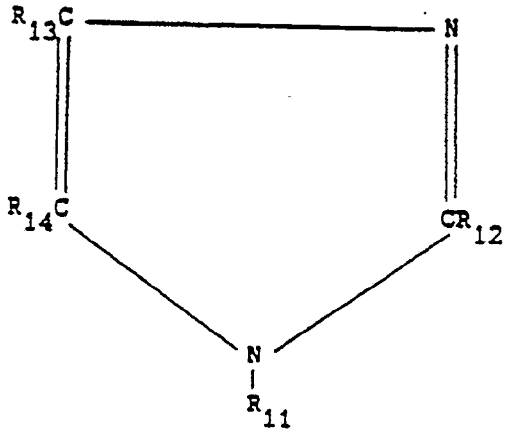

(X)

in which $R_{11}$, $R_{12}$, $R_{13}$ and $R_{14}$, which may be identical or different, each denote a hydrogen atom, an alkyl or alkoxy radical having from 1 to 20 carbon atoms, or a vinyl, phenyl or nitro radical, it being possible for $R_{13}$ to form with $R_{14}$ and the carbon atoms to which these radicals are bound a single ring such as, for example, a benzene ring, it also being possible for $R_{11}$ to denote a carbonyl group bound to a second imidazole ring.

4. Polymers according to any one of claims 1 to 3, characterised in that :

* on the one hand : the quantities of reactants (a) and (c) are chosen so as to have, by weight with respect to the total weight of these constituents :

from 70 to 90% of the bis(maleimide)(s) (a) of formula (I), and

from 10 to 30% of diamine(s) (c) of formula (III), (IV) and/or (V) ;

* and on the other hand : as regards the quantity of bis(maleimide)-siloxane (b) of formula (II), this represents from 5 to 30% of the total weight of the reactants (a) + (c).

5. Polymers according to any one of claims 1 to 4, characterised in that the quantity of the optional reactant (d), when one is used, represents less than 60%, and preferably from 5% to 50%, of the total weight of the reactants (a) + (c),

6. Polymers according to any one of claims 1 to 5, characterised in that the optional catalyst (e), when one is used, is employed at a level falling within the range from 0.01 to 1%, and preferably from 0.05 to 0.5%, by weight with respect to the combination of the reactants (a) + (b) + (c) +, optionally, (d).

7. Polymers according to any one of claims 1 to 6, characterised in that they take the form of cured polymers which are insoluble in the usual solvents and which do not show significant softening below the temperature at which they begin to decompose.

8. Polymers according to any one of claims 1 to 6, characterised in that they take the form of thermosetting prepolymers (P) which are soluble in polar organic solvents and possess a softening point at a temperature below 200°C.

9. Process for preparing cured polymers according to claims 1 to 7, characterised in that the mixture of the reactants is heated directly to a temperature of between 50°C and 300°C, working in bulk or in an organic diluent.

10. Preparation process according to claim 9, characterised in that it consists in heating the mixture of the reactants to between 50°C and 180°C to form, in a first stage, a prepolymer (P), and then inducing the curing of the prepolymer (P) by heating to a temperature of between 150°C and 250°C.

11. Process for preparing thermosetting polymers (P) according to claims 1 to 6 and 8, characterised in that the mixture of the reactants is heated directly to a temperature of between 50°C and 180°C, working in bulk or in an organic diluent.

12. Preparation process according to any one of claims 9 to 11, characterised in that, when the reaction is performed in bulk, the bis(maleimides) of formula (II) in which the ratio :

$$\frac{\text{number of Si-phenyl (optionally substituted) bonds}}{\text{number of Si-alkyl bonds}}$$

is equal to at least 0.25 are used as reactant (b).

13. Application of the prepolymers according to any one of claims 1 to 8 to the manufacture of moulded articles, coatings, articles having a cellular structure and reinforced and impregnated composite materials.

**Claims for the following Contracting State : ES**

1. Process for preparing polymers containing imide groups that take the form of cured polymers which are insoluble in the usual solvents and do not show significant softening below the temperature at which they begin to decompose, characterised in that a mixture of the following reactants is heated directly to a temperature ranging from 50°C to 300°C :

(a) 50 to 98% with respect to the total weight of the reactants (a) + (c) of an N,N'-bis(maleimide) or of a combination of several bis(maleimides) of formula :

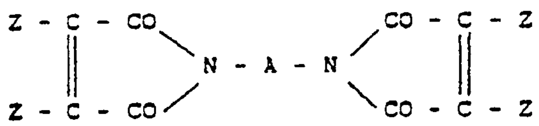

(I)

in which :

the symbols Z, which may be identical or different, each denote H, $CH_3$ or Cl ;

the symbol A denotes a divalent radical chosen from the group consisting of the following radicals : cyclohexylenes ; phenylenes ; 4-methyl-1,3-phenylenes ; 2-methyl-1,3-phenylene ; 5-methyl-1,3-phenylene ; 2,5-diethyl-3-methyl-1,4-phenylene ; and the radicals of formula :

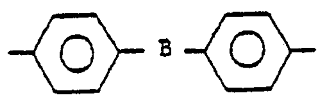

in which B denotes a single valency bond or a group :

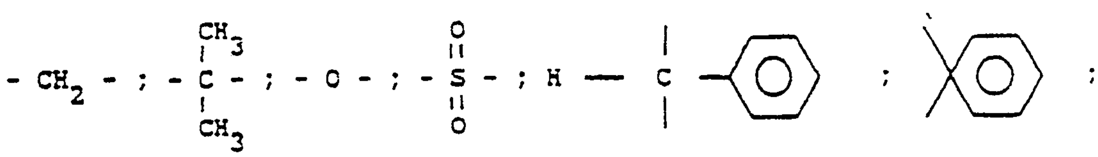

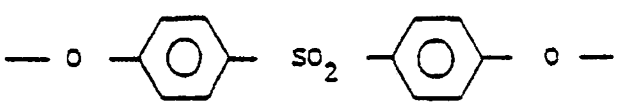

(b) at least 5% and less than 40% of the total weight of the reactants (a) + (c) of an N,N'-bis(maleimide) containing a diorganopolysiloxane group corresponding essentially to the general formula :

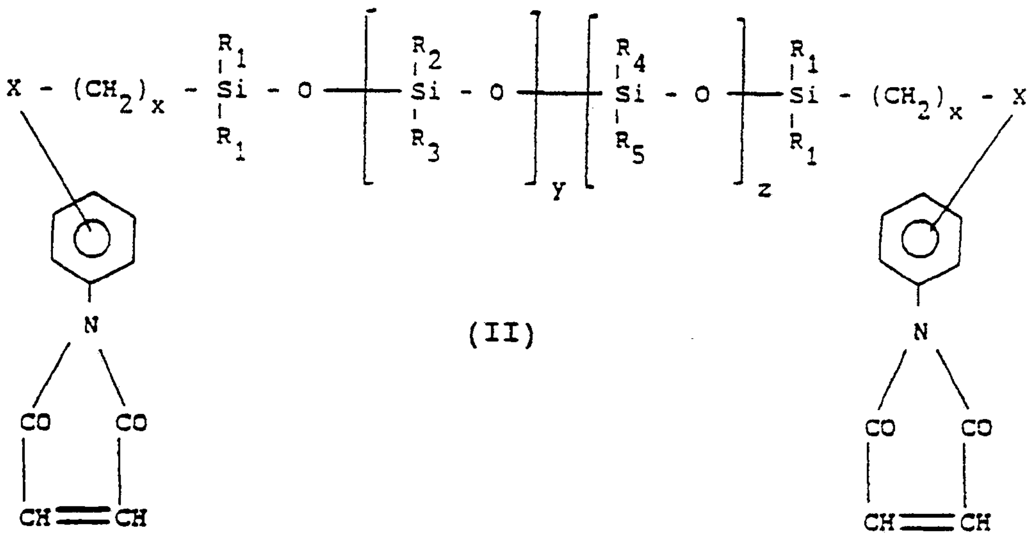

(II)

in which :

X, which is in the ortho, meta or para position with respect to the carbon atom of the benzene ring linked to the nitrogen denotes one of the following atoms or groups :

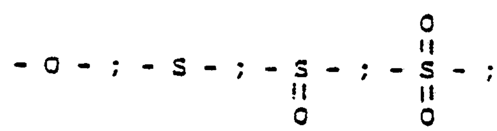

$R_1$, $R_2$, $R_3$, $R_4$ and $R_5$, which may be identical or different, each denote a monovalent hydrocarbon radical chosen from : linear or branched alkyl radicals having from 1 to 12 carbon atoms, it being possible for these radicals to be substituted with one or more chlorine, bromine or fluorine atoms or with a —CN group ; a phenyl radical optionally substituted with one or more alkyl and/or alkoxy radicals having from 1 to 4 carbon atoms or with one or more chlorine atoms ;

the symbol x is an integer falling within the range from 2 to 8 ;

the symbols y and z denote numbers, which may be identical or different, integral or fractional, whose sum falls within the range from 0 to 100 ;

(c) 2 to 50% with respect to the total weight of the reactants (a) + (c) of one or more diprimary diamines selected from the group composed of :

* (c1) the species corresponding to the general formula :

$$H_2N\text{-}E\text{-}NH_2 \quad \text{(III)}$$

in which the symbol E denotes one of the divalent radicals denoted by the symbol A of the formula (I), it being possible for the symbols A and E present in the same polymer to be identical to or different from one another ;

* (c2) the species corresponding to the general formula :

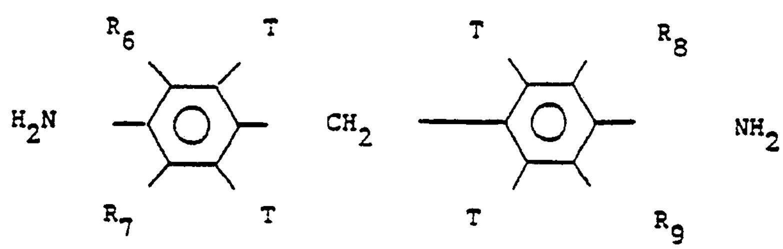 (IV)

in which :

the symbols $R_6$, $R_7$, $R_8$ and $R_9$, which may be identical or different, each denote a methyl, ethyl, propyl or

isopropyl radical ;
the symbols T, which may be identical or different, each denote a hydrogen atom or a chlorine atom ; and
* (c3) the species corresponding to the general formula :

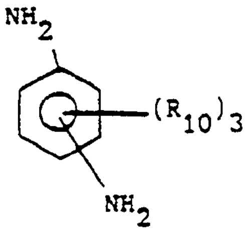

(V)

in which :
the amino radicals are in the meta or para position with respect to one another ;
the symbols $R_{10}$, which may be identical or different, each denote a methyl, ethyl, propyl or isopropyl radical;
(d) optionally, one or more monomers other than a bis(maleimide) of formula (I) or of formula (II) and containing one or more polymerisable carbon-carbon double bonds ; and
(e) optionally, a catalyst ;
this process being performed by working in bulk or in an organic diluent.

2. Process for preparing polymers containing imide groups that take the form of thermosetting prepolymers (P) which are soluble in polar organic solvents and possess a softening point at a temperature below 200°C, characterised in that the mixture of the reactants (a), (b), (c), optionally (d) and optionally (e), defined above in claim 1, is heated directly to a temperature of between 50°C and 180°C, working in bulk or in an organic diluent.

3. Process according to claim 1, characterised in that it consists in heating the mixture of the reactants to between 50°C and 180°C to form, in a first stage, a prepolymer (P), and then inducing the curing of the prepolymer P by heating to a temperature of between 150°C and 250°C.

4. Process according to any one of claims 1 to 3, characterised in that the optional reactant (d), when one is used, consists of the following species :
($d_1$) either one or more monomers of formula :

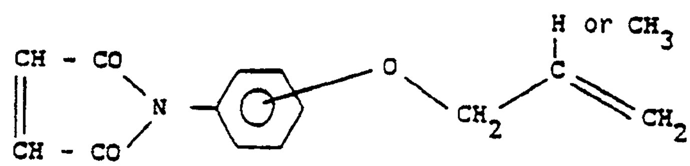

(VII)

in which the allyloxy or methallyloxy radical is in the ortho, meta or para position with respect to the carbon atom of the benzene ring linked to the nitrogen ;
($d_2$) or a compound comprising :
— a mixture of a monomer of formula :

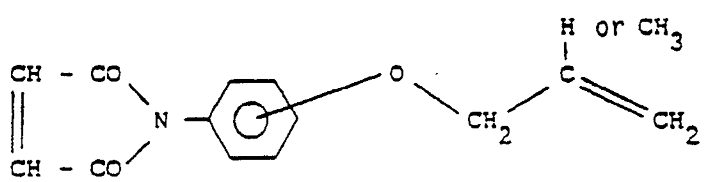

(VII)

in which the allyloxy or methallyloxy radical is in the ortho, meta or para position with respect to the carbon atom of the benzene ring linked to the nitrogen ;
— with :
• at least one monosubstituted derivative of formula :

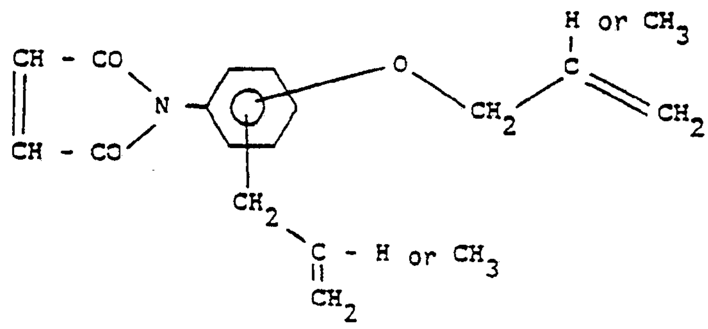

(VIII)

• and optionally one or more disubstituted derivatives of the formula :

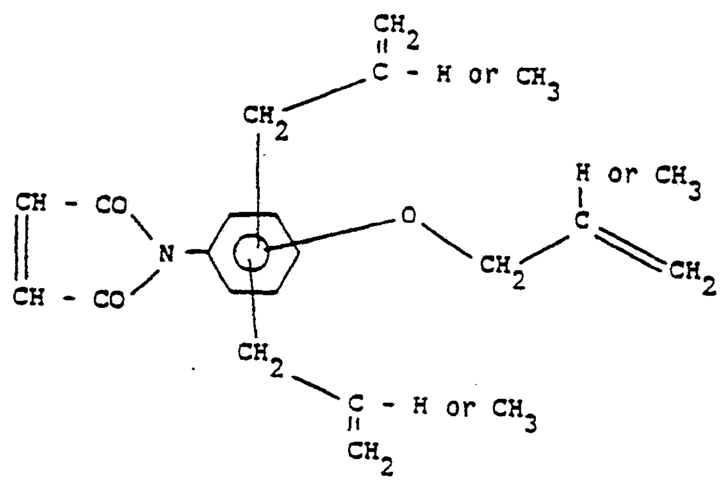

(IX)

($d_3$) or one or more substituted heterocyclic compounds containing one or more carbon-carbon double bonds.

5. Process according to any one of claims 1 to 4, characterised in that the catalyst (e), when one is used, is either ($e_1$) a free-radical polymerisation initiator, or ($e_2$) an imidazole compound of formula :

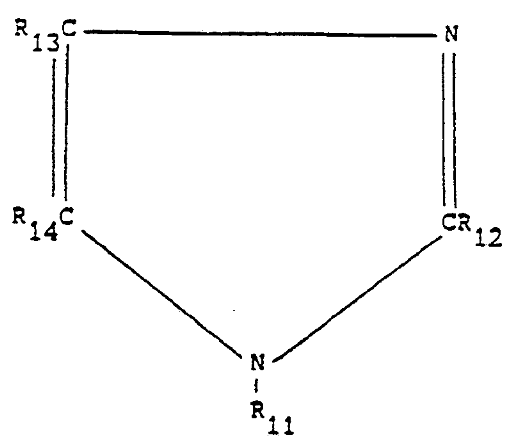

(X)

in which $R_{11}$, $R_{12}$, $R_{13}$ and $R_{14}$, which may be identical or different, each denote a hydrogen atom, an alkyl or alkoxy radical having from 1 to 20 carbon atoms, or a vinyl, phenyl or nitro radical, it being possible for $R_{13}$ to form with $R_{14}$ and the carbon atoms to which these radicals are bound a single ring such as, for example, a benzene ring, it also being possible for $R_{11}$ to denote a carbonyl group bound to a second imidazole ring.

6. Process according to any one of claims 1 to 5, characterised in that :

* on the one hand : the quantities of reactants (a) and (c) are chosen so as to have, by weight with respect

to the total weight of these constituents :

from 70 to 90% of the bis(maleimide)(s) (a) of formula (I), and

from 10 to 30% of diamine(s) (c) of formula (III), (IV) and/or (V) ;

* and on the other hand : as regards the quantity of bis(maleimide)-siloxane (b) of formula (II), this represents from 5 to 30% of the total weight of the reactants (a) + (C).

7. Process according to any one of claims 1 to 6, characterised in that the quantity of the optional reactant (d), when one is used, represents less than 60%, and preferably from 5% to 50%, of the total weight of the reactants (a) + (c).

8. Process according to any one of claims 1 to 7, characterised in that the optional catalyst (e), when one is used, is employed at a level falling within the range from 0.01 to 1%, and preferably from 0.05 to 0.5%, by weight with respect to the combination of the reactants (a) + (b) + (c) +, optionally, (d).

9. Process according to any one of claims 1 to 8, characterised in that, when the reaction is performed in bulk, the bis(maleimides) of formula (II) in which the ratio :

$$\frac{\text{number of Si–phenyl (optionally substituted) bonds}}{\text{number of Si–alkyl bonds}}$$

is equal to at least 0.25 are used as reactant (b).

10. Application of the polymers according to any one of claims 1 to 9 to the manufacture of moulded articles, coatings, articles having a cellular structure and reinforced and impregnated composite materials.

## Patentansprüche

### Patentansprüche für folgende Vertragsstaaten : AT, BE, CH, DE, FR, GB, IT, LI, LU, NL, SE

1. Polymere mit Imidgruppen, dadurch gekennzeichnet, daß sie das Produkt der Reaktion bei einer Temperatur von 50 bis 300°C umfassen zwischen

(a) 50 bis 98%, bezogen auf das Gesamtgewicht der Reagentien (a) + (c),eines N,N'-Bis-maleimids oder einer Assoziation von mehreren Bis-maleimiden der Formel

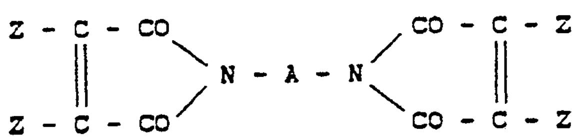

(I)

worin

- die Symbole Z, die gleich oder verschieden sind, jeweils H, $CH_3$ oder Cl bedeuten ;
- das Symbol A einen zweiwertigen Rest wiedergibt, ausgewählt unter den Resten : Cyclohexylen ; Phenylen ; 4-Methyl-1,3-phenylen ; 2-Methyl-1,3-phenylen ; 5-Methyl-1,3-phenylen ; 2,5-Diethyl-3-methyl-1,4-phenylen ; und den Resten der Formel

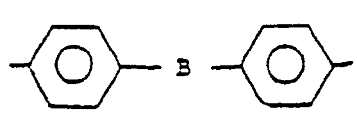

worin B eine einfache Valenzbindung oder eine Gruppe

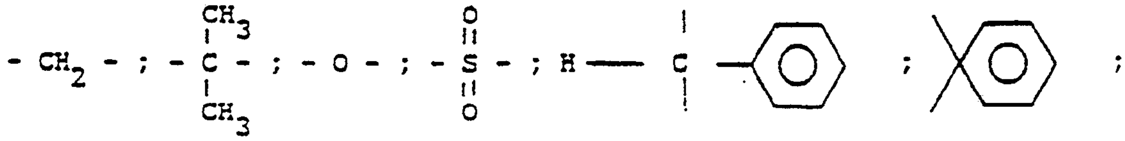

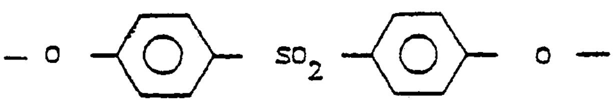

wiedergibt ;

(b) zumindest 5% und weniger als 40% des Gesamtgewichts der Reagentien (a) + (c) eines N,N'-Bis-maleimids mit Diorganopolgsiloxangruppen im wesentlichen entsprechend der allegemeinen Formel

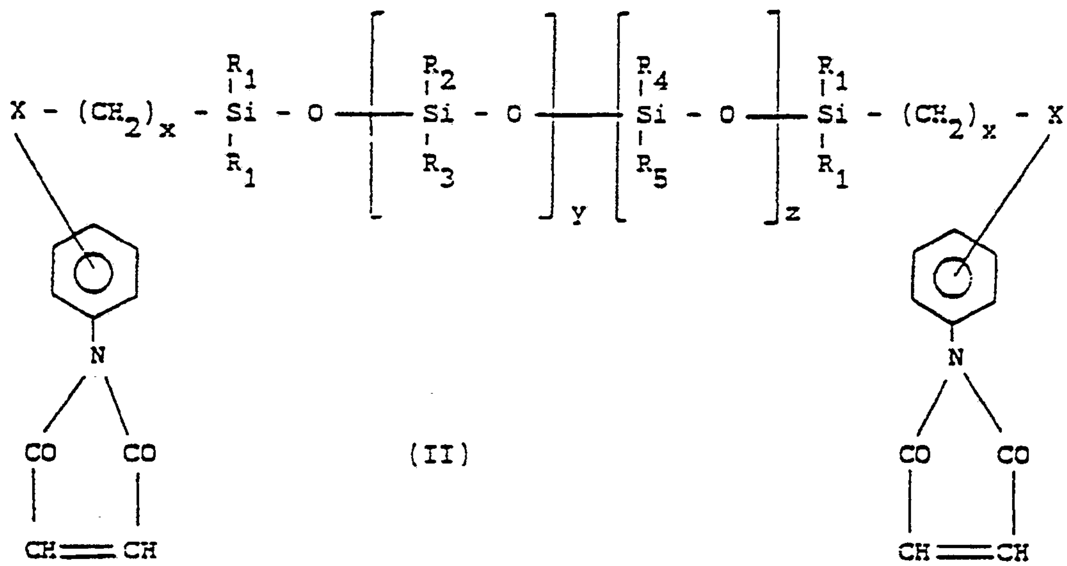

(II)

worin

- X, welches sich in ortho-, meta- oder para- Stellung in bezug auf das an den Sticstoff gebundene Kohlenstoffatom des Benzolrings befindet, eines der folgenden Atome oder Gruppen bedeutet :

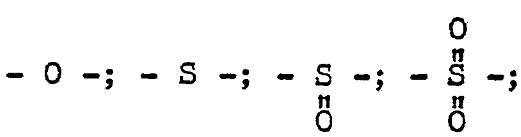

- $R_1$, $R_2$, $R_3$, $R_4$ und $R_5$, die gleich oder voneinander verschieden sind, jeweils einen einwertigen voneinwasserstoffrest wiedergeben, ausgewallt unter : den linearen oder verzweigten Alkylresten mit 1 bis 12 Kohlenstoffatomen, wobei diese Reste durch ein oder mehrere Chlor-, Brom- oder Fluoratome oder durch eine Gruppe —CN substituiert sein können ; einem Phenylrest, der gegebenenfalls durch einen oder mehrere Alkyl- und/oder Alkoxyreste mit 1 bis 4 Kohlenstoffatomen oder durch ein oder mehrere Chloratome substituiert ist ;
- das Symbol x eine ganze Zahl im Bereich von 2 bis 8 ist ;
- die Symbole y und z identische oder verschiedene ganze oder Bruchzahlen wiedergeben, deren Summe im Bereich von 0 bis 100 liegt ;

(c) 2 bis 50%, bezogen auf das Gesamtgewicht der Reagentien (a) + (c), eines oder mehrerer biprimärer Diamine der Gruppe, gebildet durch :

+ (c1) die der allgemeinen Formel

$$H_2N\text{-}E\text{-}NH_2 \quad (III)$$

entsprechenden Species, worin das Symbol E für einen der zweiwertigen Reste steht, welche das Symbol A der Formel (I) wiedergibt, wobei die in dem gleichen Polymeren enthaltenen Symbole A und E gleich oder voneinander verschieden sein können ;

+ (c2) die der allgemeinen Formel

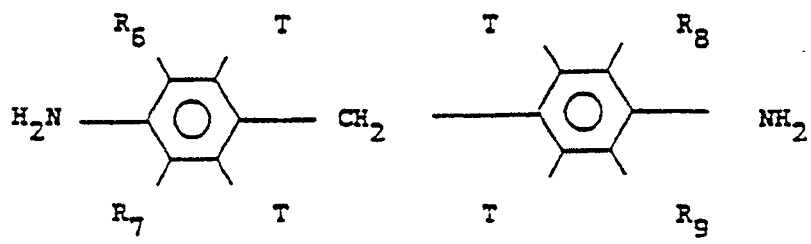 (IV)

entsprechenden Species, worin

- die Symbole $R_6$, $R_7$, $R_8$ und $R_9$, die gleich oder voneinander verschieden sind, jeweils für einen Methyl-, Ethyl-, Propyl- oder Isopropylrest stehen ;
- die Symbole T, die gleich oder voneinander verschieden sind, jeweils für ein Wasserstoffatom oder ein Chloratom stehen ;

+ und (c3) die der allgemeinen Formel

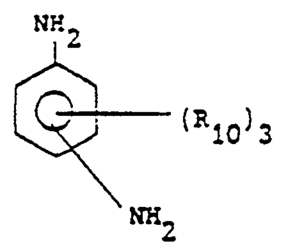 (V)

entsprechenden Species, worin

- die Aminoreste sich in bezug aufeinander in meta- oder para-Stellung befinden ;
- die Symbole $R_{10}$, die gleich oder voneinander verschieden sind, jeweils für einen Methyl-, Ethyl-, Propyl- oder Isopropylrest stehen ;

(d) gegebenenfalls einem oder mehreren von einem Bis-maleimid der Formel (I) oder der Formel (II) verschiedenen Monomeren, die eine oder mehrere polymerisierbare Kohlenstoff-Kohlenstoff-Doppelbindungen enthalten ;

und (e) gegebenenfalls einem Katalysator.

2. Polymere gemäß Anspruch 1, dadurch gekennzeichnet, daß das fakultative Reagens (d), wenn man hiervon eines verwendet, aus den Folgenden Species besteht ;

($d_1$) entweder einem oder mehrerenMonomerender Formel

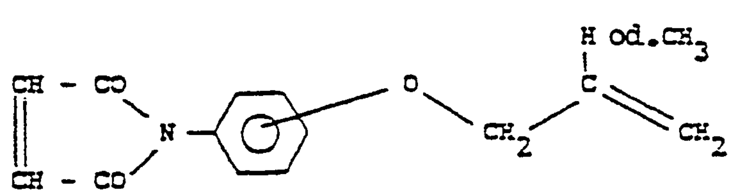 (VII)

worin sich der Allyloxy- oder Methallyloxyrest in ortho-, meta- oder para-Stellung in bezug auf das an den Stickstoff gebundene Kohlenstoffatom des Benzolrings befindet ;

($d_2$) oder einer Zusammensetzung, umfassend :

— ein Gemisch eines Monomeren der Formel

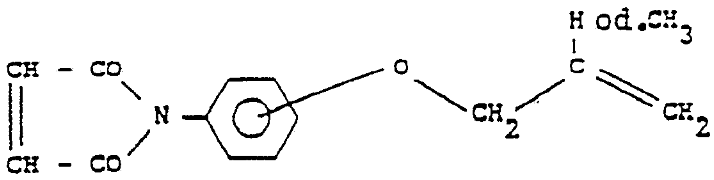

(VII)

worin sich der Allyloxy- oder Methallyloxyrest in ortho-, meta- oder para-Stellung in bezug auf das an den Stickstoff gebundene Kohlenstoffatom des Benzolrings befindet,

— mit

• zumindest einem monosubstituerten Derivat der Formel

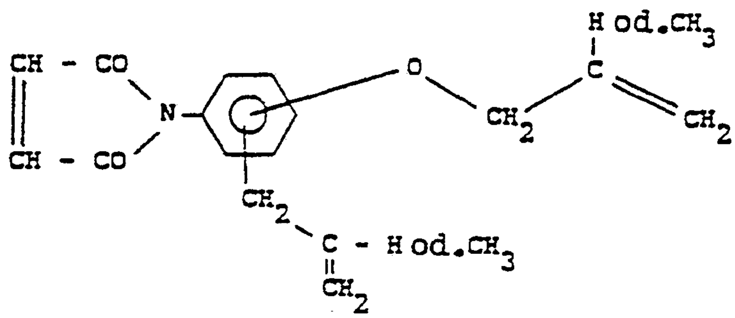

(VIII)

• und gegebenenfalls einem oder mehreren disubstituierten Derivaten der Formel

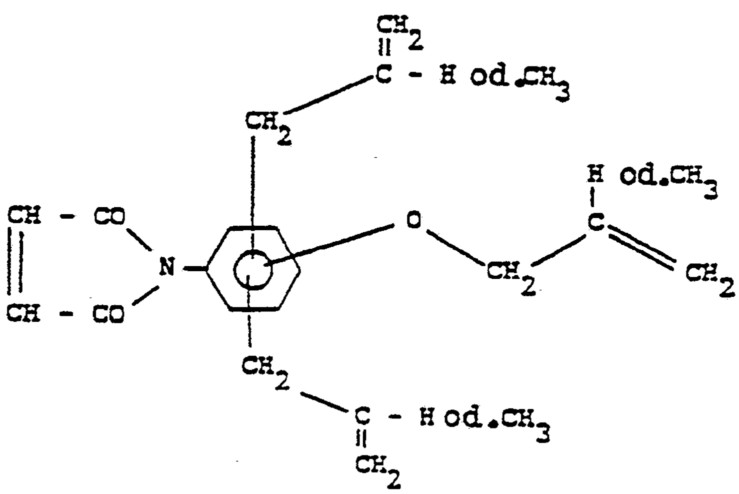

(IX)

($d_3$) oder einem oder mehreren substituierten Heterocyclen, die eine oder mehrere Kohlenstoff-Kohlenstoff-Doppelbindungen enthalten.

3. Polymere gemäß einem der Ansprüche 1 und 2, dadurch gekennzeichnet, daß der Katalysator (e), wenn man hiervon einen verwendet, entweder ($e_1$) ein radikalischer Polymerisationsinitiator oder ($e_2$) eine Imidazolverbindung der Formel

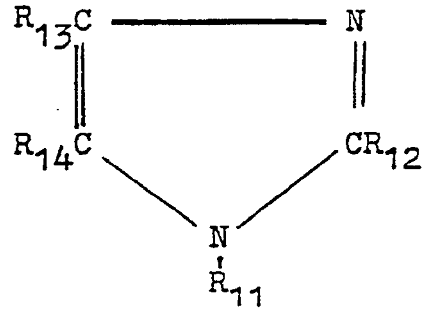

(X)

ist, worin $R_{11}$, $R_{12}$, $R_{13}$ und $R_{14}$, die gleich oder verschieden sind, jeweils bedeuten : ein Wasserstoffatom, einen Alkyl- oder Alkyloxyrest mit 1 bis 20 Kohlenstoffatomen, Vinyl, -Phenyl, Nitro, wobei $R_{13}$ mit $R_{14}$ und den Kohlenstoffatomen, an die diese Reste gebunden sind, einen einzigen Ring, wie z.B. einen Benzolring, bilden können, wobei $R_{11}$ auch eine an einen zweiten Imidazolring gebundene Carbonylgruppe bedeuten kann.

4. Polymere gemäß einem der Ansprüche 1 bis 3, dadurch gekennzeichnet, daß

+ einesteils : man die Mengen der Reagentien (a) und (c) derart wählt, daß man, ausgedrückt als Gewicht, bezogen auf das Gesamtgewicht dieser Bestandteile, vorliegen hat :

— 70 bis 90% Bis-maleimid(e) (a) der Formel (I),

— 10 bis 30% Diamin(e) (c) der Formel (III), (IV) und/oder (V) ;

+ und anderenteils : bezüglich der Menge des Bis-maleimidsiloxans (b) der Formel (II) diese 5 bis 30% des Gesamtgewichts der Reagentien (a) + (c) beträgt.

5. Polymere daß einem der Ansprüche 1 bis 4, dadurch gekennzeichnet, daß die Menge des fakultativen Reagens (d), wenn hiervon eines verwendet, weniger als 60% und vorzugsweise 5 bis 50% des Gesamtgewichts der Reagentien (a) + (c) beträgt.

6. Polymere gemäß einem der Ansprüche 1 dis 5, dadurch gekennzeichnet, daß der fakultative Katalysator (e), wenn man hiervon einen verwendet, in einer Menge im Bereich von 0,01 dis 1% und vorzugsweise 0,05 bis 0,5%, ausgedrückt als Gewicht, bezogen auf die Gesamtheit der Reagentien (a) + (b) + (c) + gegebenenfalls (d), eingesetzt wird.

7. Polymere gemäß einem der Ansprüche 1 dis 6, dadurch gekennzeichnet, daß sie in Form von gehärteten Polymeren vorliegen, die in üblichen Lösungsmitteln unlöslich sind und keine merkliche Erweichung unterhalb der Temperatur, bei der sie sich zu zersetzen beginnen, zeigen.

8. Polymere gemäß einem der Ansprüche 1 bis 6, dadurch gekennzeichnet, daß sie in Form von wärmehärtbaren Präpolymeren (P) vorliegen, die in polaren, organischen Lösungsmitteln löslich sind und einen Erweichungspunkt bei einer Temperatur unterhalb 200°C aufzeigen.

9. Verfahren zur Herstellung von gehärteten Polymeren gemäß den Ansprüchen 1 bis 7, dadurch gekennzeichnet, daß man direkt das Gemisch der Reagentien auf eine Temperatur zwischen 50 und 300°C erhitzt, wobei man in der Masse oder in dem Medium eines organischen Verdünnungsmittels arbeitet.

10. Verfahren zur Herstellung gemäß Anspruch 9, dadurch gekennzeichnet, daß es darin besteht, das Gemisch der Reagentien zwischen 50 und 180°C zu erhitzen, um zu einem ersten Zeitpunkt ein Präpolymeres (P) zu bilden, und danach die Härtung des Präpolymeren (P) durch Erhitzen auf eine Temperatur zwischen 150 und 250°C herbeizuführen.

11. Verfahren zur Herstellung von wärmehärtbaren Polymeren (P) gemäß den Ansprüchen 1 bis 6 und 8, dadurch gekennzeichnet, daß man direkt das Gemisch der Reagentien auf eine Temperatur zwischen 50 und 180°C erhitzt, wobei man in der Masse oder in dem Medium eines organischen Vedünnungsmittels arbeitet.

12. Verfahren zur Herstellung gemäß einem der Ansprüche 9 bis 11, dadurch gekennzeichnet, daß man, wenn man in der Masse arbeitet, als Reagens (b) die Bis-maleimide der Formel (II) verwendet, worin das Verhältnis

$$\frac{\text{Anzahl der Si–(gegebenenfalls substituiertes) Phenyl–Bindungen}}{\text{Anzahl der Si–Alkyl–Bindungen}}$$

zumindest 0,25 beträgt.

13. Verwendung der Präpolymeren gemäß einem der Ansprüche 1 bis 8 zur Herstellung von Formgegenständen, Überzügen, Artikeln mit Zellstruktur und verstärkten und imprägnierten Verbundmaterialien.

**Patentanspruch für folgenden Vertragsstaat : ES**

1. Verfahren zur Herstellung von Polymeren mit Imidgruppen, die in Form von gehärteten, in üblichen Lösungsmitteln unlöslichen Polymeren vorliegen, welche unterhalb der Temperatur, bei der sie sich zu zersetzen beginnen, keine merkliche Erweichung zeigen, dadurch gekennzeichnet, daß man direkt auf eine Temperatur von 50 bis 300°C das Gemisch der folgenden Reagentien erhitzt :

(a) 50 bis 98%, bezogen auf das Gesamtgewicht der Reagentien (a) + (c), eines N,N'-Bis-maleimids oder einer Assoziation von mehreren Bis-maleimiden der Formel

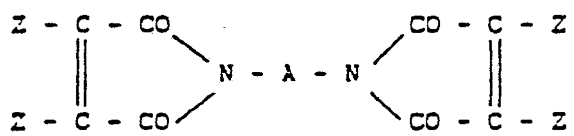

(I)

worin

- die Symbole Z, die gleich oder verschieden sind, jeweils H, $CH_3$ oder Cl bedeuten ;
- das Symbol A einen zweiwertigen Rest wiedergibt, ausgewählt unter den Resten : Cyclohexylen ; Phenylen ; 4-Methyl-1,3-phenylen ; 2-Methyl-1,3-phenylen ; 5-Methyl-1,3-phenylen ; 2,5-Diethyl-3-methyl-1,4-phenylen ; und den Resten der Formel

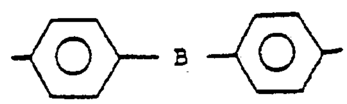

worin B eine einfache Valenzbindung oder eine Gruppe

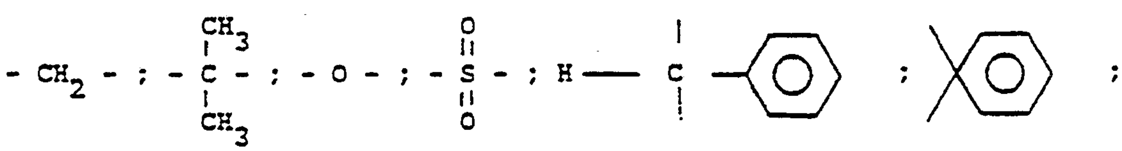

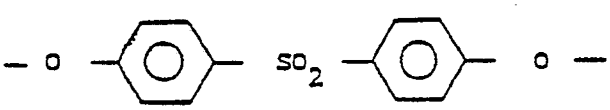

wiedergibt ;

(b) zumindest 5% und weniger als 40% des Gesamtgewichts der Reagentien (a) + (c) eines N,N'-Bis-maleimids mit Diorganopolysiloxangruppen im wesentlichen entsprechend der allgemeinen Formel

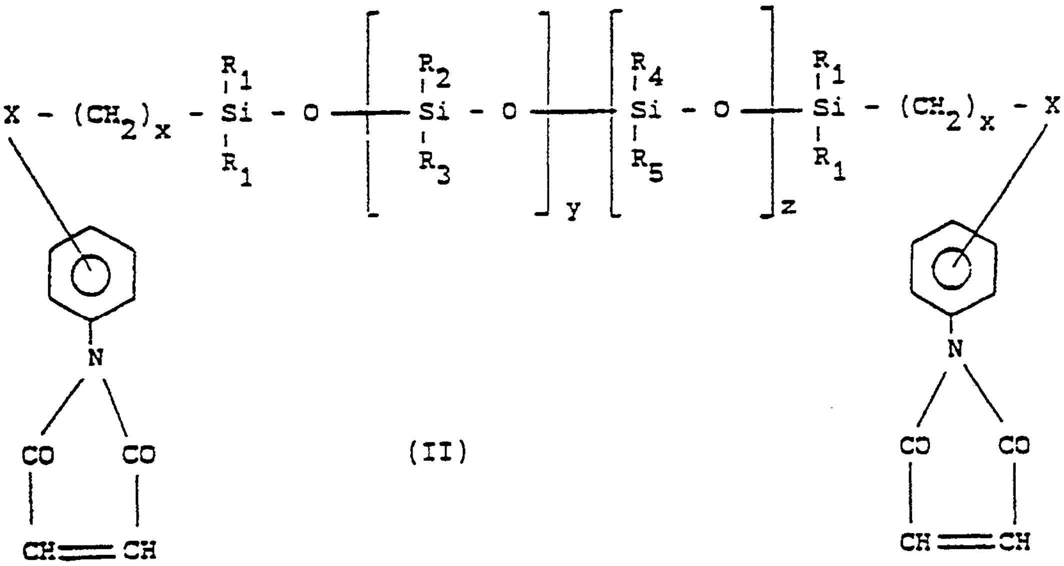

(II)

worin

• X, welches sich in ortho-, meta- oder para- Stellung in bezug auf das an den Stickstoff gebundene Kohlenstoffatom des Benzolrings befindet, eines der folgenden Atome oder Gruppen bedeutet:

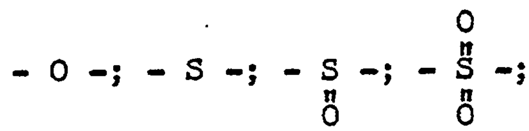

• $R_1$, $R_2$, $R_3$, $R_4$ und $R_5$, die gleich oder voneinander verschieden sind, jeweils einen einwertigen Kohlenwasserstoffrest wiedergeben, ausgewählt unter: den linearen oder verzweigten Alkylresten mit 1 bis 12 Kohlenstoffatomen, wobei diese Reste durch ein oder mehrere Chlor-, Brom- oder Fluoratome oder durch eine Gruppe —CN substituiert sein können; einem Phenylrest, der gegebenenfalls durch einen oder mehrere Alkyl- und/oder Alkoxyreste mit 1 bis 4 Kohlenstoffatomen oder durch ein oder mehrere Chloratome substituiert ist;

• das Symbol x eine ganze Zahl im Bereich von 2 bis 8 ist;

• die Symbole y und z identische oder verschiedene ganze oder Bruchzahlen wiedergeben, deren Summe im Bereich von 0 bis 100 liegt;

(c) 2 bis 50%, bezogen auf das Gesamtgewicht der Reagentien (a) + (c), eines oder mehreror biprimärer Diamine der Gruppe, gebildet durch

+ (c1) die der allgemeinen Formel

$$H_2N\text{-}E\text{-}NH_2 \quad (III)$$

entsprechenden Species, worin das Symbol E für einen der zweiwertigen Reste steht, welche das Symbol A der Formel (I) wiedergibt, wobei die in dem gleichen Polymeren enthaltenen Symbole A und E gleich oder voneinander verschieden sein können;

+ (c2) die der allgemeinen Formel

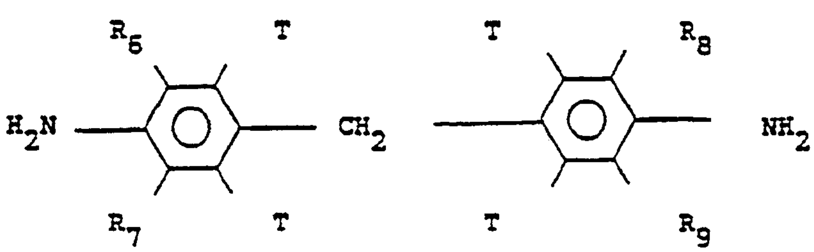

(IV)

entsprechenden Species, worin

- die Symbole $R_6$, $R_7$, $R_8$ und $R_9$, die gleich oder voneinander verschieden sind, jeweils für einen Methyl-, Ethyl-, Propyl- oder Isopropylrest stehen ;
- die Symbole T, die gleich oder voneinander verschieden sind, jeweils für ein Wasserstoffatom oder ein Chloratom stehen ;

+ und (c3) die der allgemeinen Formel

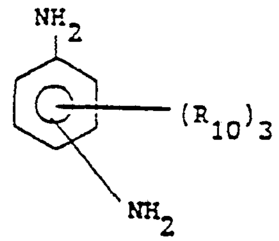

(V)

entsprechenden Species, worin

- die Aminoreste sich in bezug aufeinander in meta- oder para-Stellung befinden ;
- die Symbole $R_{10}$, die gleich oder voneinander verschieden sind, jeweils für einen Methyl-, Ethyl-, Propyl- oder Isopropylrest stehen ;

(d) gegebenenfalls eines oder mehrere von einem Bis-maleimid der Formel (I) oder der Formel (II) verschiedene Monomere, die eine oder mehrere polymerisierbare Kohlenstoff-Kohlenstoff-Doppelbindungen enthalten ;

und (e) gegebenefälls einen Katalysator ; wobei dieses Verfahren durchgeführt wird, indem man in der Masse oder in dem Medium eines organischen Verdünnungsmittels arbeitet.

2. Verfahren zur Herstellung von Polymeren mit Imidgruppen, die in Form von wärmehärtbaren Präpolymeren (P) vorliegen, die in polaren, organischen Lösungsmitteln löslich sind und einen Erweichungspunkt bei einer Temperatur unterhalb 200°C zeigen, dadurch gekennzeichnet, daß man direkt das Gemisch der Reagentien (a), (b),(c), gegebenenfalls (d) und gegebenenfalls (e), wie vorstehend in Anspruch 1 definiert, auf eine Temperatur zwischen 50 und 180°C erhitzt, wobei man in der Masse oder in dem Medium eines organischen Verdünnungsmittels arbeitet.

3. Verfahren gemäß Anspruch 1, dadurch gekennzeichnet, daß es darin besteht, das Gemisch der Reagentien auf eine Temperatur zwischen 50 und 180°C zu erhitzen, um zu einem ersten Zeitpunkt ein Präpolymeres (P) zu bilden, und hiernach die Härtung des Präpolymeren (P) durch Erhitzen auf eine Temperatur zwischen 150 und 250°C vorzunehmen.

4. Verfahren gemäß einem der Ansprüche 1 bis 3, dadurch gekennzeichnet, daß das fakultative Reagens (d), wenn man hiervon eines verwendet, aus den folgenden Species besteht :

($d_1$) entweder einem oder mehreren Monomerender Formel

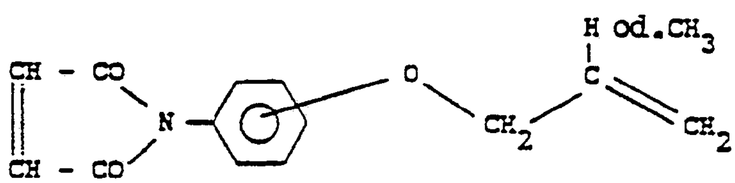

(VII)

worin sich der Allyloxy- oder Methallyloxyrest in ortho-, meta- oder para-Stellung in bezug auf das an den Stickstoff gebundene Kohlenstoffatom des Benzolrings befindet ;

($d_2$) oder einer Zusammensetzung, umfassend :

— ein Gemisch eines Monomeren der Formel

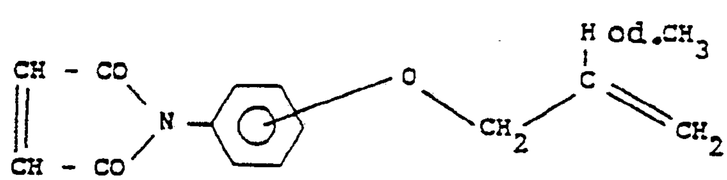

(VII)

worin sich der Allyloxy- oder Methallyloxyrest in ortho-, meta- oder para-Stellung in bezug auf das an den Stickstoff gebundene Kohlenstoffatom des Benzolrings befindet,

— mit

• zumindest einem monosubstituierten Derivat der Formel

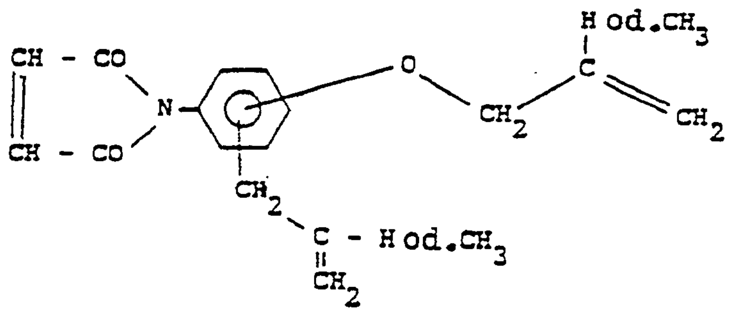

(VIII)

• und gegebenenfalls einem oder mehreren disubstituierten Derivaten der Formel

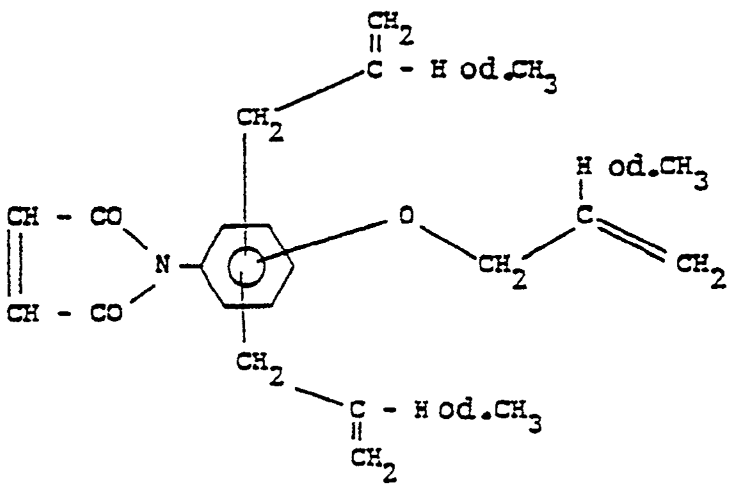

(IX)

($d_3$)oder einem oder mehreren substituierten Heterocyclen, die eine oder mehreren Kohlenstoff-Kohlenstoff-Doppelbindungen enthalten.

5. Verfahren gemäß einem der Ansprüche 1 bis 4, dadurch gekennzeichnet, daß der Katalysator (e), wenn man hiervon einen verwendet, entweder ($e_1$) ein radikalischer Polymerisationsinitiator oder ($e_2$) eine Imidazolverbindung der Formel

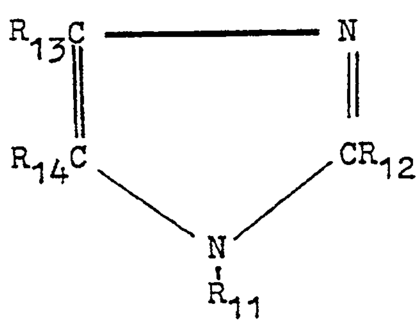

(X)

ist, worin $R_{11}$, $R_{12}$, $R_{13}$ und $R_{14}$, die gleich oder verschieden sich, jeweils bedeuten : ein Wasserstoffatom, einen Alkyl- oder Alkoxyrest mit 1 bis 20 Kohlenstoffatomen, Vinyl, Phenyl, Nitro, wobei $R_{13}$ et $R_{14}$ und den Kohlenstoffatomen, an die diese Reste gebunden sind, einen einzigen Ring, wie z.B. einen Benzolring, bilden können, wobei $R_{11}$ auch eine an einen zweiten Imidazolring gebundene Carbonylgruppe bedeuten kann.

6. Verfahren gemäß einem der Ansprüche 1 bis 5, dadurch gekennzeichnet, daß

+ einesteils : man die Mengen der Reagentien (a) und (c) derart wählt, daß man, ausgedrückt als Gewicht, bezogen auf das Gesamtgewicht dieser Bestandteile, vorliegen hat :

— 70 bis 90% Bis-maleimid(e) (a) der Formel (I),

— 10 bis 30% Diamin(e) (c) dar Formal (III), (IV) und/oder (V) ;

+ und anderenteils : bezüglich der Menge des Bis-maleimidsiloxans (b) der Formel (II) diese 5 bis 30% des Gesamtgewichts der Reagentien (a) + (c) beträgt.

7. Verfahren gemäß einem der Ansprüche 1 bis 6, dadurch gekennzeichnet, daß die Menge des fakultativen Reagens (d), wenn man hiervon eines verwendet, weniger als 60% und vorzugsweise 5 bis 50% des Gesamtgewichts der Reagentien (a) + (c) beträgt.

8. Verfahren gemäß einem der Ansprüche 1 bis 7, dadurch gekennzeichnet, daß der fakultative Katalysator (e), wenn man hiervon einen verwendet, in einer im Bereich von 0,01 bis 1 und vorzugsweise 0,05 bis 0,5 Gew.%, bezogen auf die Gesamtheit der Reagentien (a) + (b) + (c) + gegebenenfalls (d) liegenden Menge eingesetzt wird.

9. Verfahren gemäß einem der Ansprüche 1 bis 8, dadurch gekennzeichnet, daß man, wenn man in der Masse arbeitet, als Reagens (b) die Bis-maleimide der Formel (II) verwendet, worin das Verhältnis

$$\frac{\text{Anzahl der Si–(gegebenenfalls substituiertes) Phenyl–Bindungen}}{\text{Anzahl der Si–Alkyl–Bindungen}}$$

zumindest 0,25 beträgt.

10. Verwendung der gemäß einem der Ansprüche 1 bis 9 hergestellten Präpolymeren zur Herstellung von Formgegenständen, Überzügen, Artikeln mit Zellstruktur und verstärken und imprägnierten Verbundmaterialien.